# EUROPEAN PATENT APPLICATION

(11) **EP 4 842 083 A1**
(43) Date of publication of application: **18.11.2026**
(21) Application number: 25755294.3
(22) Date of filing: 17.02.2025
(51) Int. Cl.: H04W 52/02, H04W 48/14, H04W 48/10

(54) **METHOD AND APPARATUS FOR ENERGY SAVING IN COMMUNICATION SYSTEM**

(30) Priority: 15.02.2024 KR 20240021416
(71) Applicant: Samsung Electronics Co., Ltd., Suwon-si, Gyeonggi-do 16677 (KR)
(72) Inventor: YI, Junyung, Suwon-si, Gyeonggi-do 16677 (KR); KIM, Younsun, Suwon-si, Gyeonggi-do 16677 (KR); RYU, Hyunsuk, Suwon-si, Gyeonggi-do 16677 (KR); LEE, Jaewon, Suwon-si, Gyeonggi-do 16677 (KR); CHOI, Seunghoon, Suwon-si, Gyeonggi-do 16677 (KR)
(74) Representative: Nederlandsch Octrooibureau
(86) International application number: PCT/KR2025/002277
(87) International publication number: WO 2025/174152

(57) **Abstract**

The present disclosure relates to a 5G or 6G communication system for supporting a higher data transmission rate. A method performed by a user equipment in a communication system, according to an embodiment of the present disclosure, comprises the steps of: receiving a synchronization signal/physical broadcast channel (SS/PBCH) block of a first cell from the first cell; receiving, from the first cell, an uplink (UL) wake-up signal (WUS) configuration for a second cell; transmitting a UL WUS to the second cell on the basis of the UL WUS configuration for the second cell; and receiving, from the second cell, an on-demand system information block 1 (SIB1) of the second cell after transmitting the UL WUS.

## Description

### [Technical Field]

The present disclosure relates to operations of a terminal and a base station in a wireless communication system. More particularly, the present disclosure relates to a method and an apparatus for energy saving in wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 preprocessing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultrahigh-performance communication and computing resources.

Recently, according to the development of 5G/6G communication systems considering environments, the need for a method of reducing energy consumption of communication systems (e.g., a terminal, a base station, a network, and the like) or a method for energy saving is emerging.

### [Disclosure of Invention]

### [Technical Problem]

According to various embodiments of the present disclosure, a base station (BS) may perform SIB1 transmission in on-demand type in order to reduce energy consumption in a communication system. At this time, the BS may receive a wake-up signal (WUS) from a UE to transmit SIB1 according to on-demand. When receiving the WUS making a request for SIB1 from the UE, the BS may transmit SIB1.

According to various embodiments of the present disclosure, in a multi-cell scenario, configuration information for transmitting the wake-up signal and some information of SIB1 may be configured through an adjacent cell.

According to various embodiments of the present disclosure, for the on-demand SIB1 transmission operation, a WUS configuration including time/frequency resource configuration information for WUS transmission and SIB1 information including cell access information may be configured through higher-layer signaling or a preconfigured/prefixed method. For example, the configuration may be set through an adjacent cell. According to various embodiments of the present disclosure, a method and an apparatus for the operation of the UE/BS according to each of the configurations may be provided.

Various embodiments of the present disclosure may provide a configuration method through higher-layer signaling (e.g., RRC signaling) or a preconfigured/prefixed method for applying the on-demand SIB1 operation. According to various embodiments of the present disclosure, a method of activating and deactivating on-demand SIB1 transmission through UL signal/channel transmission based on the configuration information may be provided.

The technical problems to be solved by the present disclosure may not be limited to the above mentioned technical problems, and other technical problems which are not mentioned may be clearly understood, through the following descriptions, by those skilled in the art belonging to the present disclosure.

### [Solution to Problem]

A method performed by a terminal in a communication system according to an embodiment of the present disclosure includes receiving, from a first cell, a synchronization signal/physical broadcast channel (SS/PBCH) block of the first cell, receiving, from the first cell, an uplink (UL) wake-up signal (WUS) configuration for a second cell, transmitting a UL WUS to the second cell based on the UL WUS configuration for the second cell, and receiving, from the second cell, on-demand system information block 1 (SIB1) of the second cell after transmitting the UL WUS.

According to an embodiment of the present disclosure, the method further includes identifying a master information block (MIB) of the first cell, based on the SS/PBCH block of the first cell, identifying whether an operation related to on-demand SIB1 is activated for the first cell based on specific information included in the MIB of the first cell, and when identifying that the operation related to on-demand SIB1 is deactivated for the first cell, receiving SIB1 of the first cell from the first cell, wherein the specific information is ssb-SubcarrierOffset, pdcch-ConfigSIB1, or spare.

According to an embodiment of the present disclosure, the receiving of the UL WUS configuration for the second cell is performed when identifying that the operation related to on-demand SIB1 is deactivated for the first cell, and the UL WUS corresponds to a physical random access channel (PRACH).

According to an embodiment of the present disclosure, the method further includes identifying whether SIB1 of the second cell is provided from the second cell during a specific time interval after receiving the UL WUS configuration for the second cell, and the transmission of the UL WUS is performed when identifying that SIB1 of the second cell is not provided from the second cell during the specific time interval.

According to an embodiment of the present disclosure, the specific time interval is a time interval corresponding to a preconfigured monitoring window for SIB1 of the second cell, and a measurement value measured based on the SS/PBCH block of the second cell meets a radio resource management (RRM) requirement.

A terminal in a communication system according to an embodiment of the present disclosure includes a transceiver and a processor connected to the transceiver, and the processor is configured to receive, from a first cell, a synchronization signal/physical broadcast channel (SS/PBCH) block of the first cell, receive, from the first cell, an uplink (UL) wake-up signal (WUS) configuration for a second cell, transmit a UL WUS to the second cell based on the UL WUS configuration for the second cell, and receive, from the second cell, on-demand system information block 1 (SIB1) of the second cell after transmitting the UL WUS.

According to an embodiment of the present disclosure, the processor is configured to identify a master information block (MIB) of the first cell, based on the SS/PBCH block of the first cell, identify whether an operation related to on-demand SIB1 is activated for the first cell based on specific information included in the MIB of the first cell, and when identifying that the operation related to on-demand SIB1 is deactivated for the first cell, receive SIB1 of the first cell from the first cell, wherein the specific information is ssb-SubcarrierOffset, pdcch-ConfigSIB1, or spare.

According to an embodiment of the present disclosure, the receiving of the UL WUS configuration for the second cell is performed when identifying that the operation related to on-demand SIB1 is deactivated for the first cell and the UL WUS corresponds to a physical random access channel (PRACH).

According to an embodiment of the present disclosure, the processor is configured to identify whether SIB1 of the second cell is provided from the second cell during a specific time interval after receiving the UL WUS configuration for the second cell, and the transmission of the UL WUS is performed when identifying that SIB1 of the second cell is not provided from the second cell during the specific time interval.

According to an embodiment of the present disclosure, the specific time interval is a time interval corresponding to a preconfigured monitoring window for SIB1 of the second cell, and a measurement value measured based on the SS/PBCH block of the second cell meets a radio resource management (RRM) requirement.

A method performed by a base station in a communication system according to an embodiment of the present disclosure includes transmitting synchronization signal/physical broadcast channel (SS/PBCH) block of a first cell through the first cell, transmitting an uplink (UL) wake-up signal (WUS) configuration for a second cell through the first cell, receiving a UL WUS related to the UL WUS configuration for the second cell through the second cell, and receiving on-demand system information block 1 (SIB1) of the second cell through the second cell after receiving the UL WUS.

According to an embodiment of the present disclosure, the method further includes identifying whether an operation related to on-demand SIB1 is activated in the first cell and acquiring specific information based on a result of identifying whether the operation related to on-demand SIB1 is activated in the first cell, wherein the specific information is ssb-SubcarrierOffset, pdcch-ConfigSIB1, or spare included in a master information block (MIB) of the first cell included in the SS/PBCH block of the first cell.

According to an embodiment of the present disclosure, the transmitting of the UL WUS configuration for the second cell is performed when the operation related to on-demand SIB1 is deactivated in the first cell, and the UL WUS corresponds to a physical random access channel (PRACH).

A base station in a communication system according to an embodiment of the present disclosure includes a transceiver and a processor connected to the transceiver, wherein the processor is configured to transmit a synchronization signal/physical broadcast channel (SS/PBCH) block of a first cell through the first cell, transmit an uplink (UL) wake-up signal (WUS) configuration for a second cell through the first cell, receive a UL WUS related to the UL WUS configuration for the second cell through the second cell, and receive on-demand system information block 1 (SIB1) of the second cell through the second cell after receiving the UL WUS.

According to an embodiment of the present disclosure, the processor is configured to identify whether an operation related to on-demand SIB1 is activated in the first cell and acquire specific information based on a result of identifying whether the operation related to on-demand SIB1 is activated in the first cell, wherein the specific information is ssb-SubcarrierOffset, pdcch-ConfigSIB1, or spare included in a master information block (MIB) of the first cell included in the SS/PBCH block of the first cell.

Various embodiments of the present disclosure are merely some of the preferred embodiments of the present disclosure, and several embodiments in which technical features of various embodiments of the present disclosure are reflected may be derived and understood based on the detailed description described below by those skilled in the art.

### [Advantageous Effects of Invention]

According to an embodiment of the present disclosure, it is possible to reduce unnecessary energy consumption of the BS by transmitting signals and channels (e.g., SSB or SIB1), which were periodically transmitted all the time, only if necessary through an on-demand SIB1 operation of the BS in the communication system.

According to an embodiment of the present disclosure, it is possible to provide the on-demand SIB1 operation of the BS for energy saving of the BS and a UE operation corresponding thereto.

The effects that can be realized by the present disclosure are not limited to the above-described effects, and other effects that have not been mentioned may be clearly understood by those skilled in the art from the following description.

### [Brief Description of Drawings]

FIG. 1 illustrates a basic structure of a time-frequency domain which is a radio resource area in a wireless communication system according to an embodiment of the present disclosure.
FIG. 2 illustrates a slot structure considered in a wireless communication system according to an embodiment of the present disclosure.
FIG. 3 illustrates a time domain mapping structure of a synchronization signal and an example of a beam sweeping operation according to an embodiment of the present disclosure.
FIG. 4 illustrates a synchronization signal block considered in a wireless communication system according to an embodiment of the present disclosure.
FIG. 5 illustrates various cases of transmission of a synchronization signal block in a frequency band lower than 6 GHz considered in a wireless communication system according to an embodiment of the present disclosure.
FIG. 6 illustrates cases of transmission of a synchronization signal block in a frequency band higher than or equal to 6 GHz considered in a wireless communication system according to an embodiment of the present disclosure.
FIG. 7 illustrates cases of transmission of a synchronization signal block according to subcarrier spacing within a time of 5 ms in a wireless communication system according to an embodiment of the present disclosure.
FIG. 8 illustrates an example of describing DMRS patterns (type 1 and type 2) used for communication between a base station and a UE in a wireless communication system according to an embodiment of the present disclosure.
FIG. 9 illustrates an example of channel estimation using a DMRS received by one PUSCH in a time band of a wireless communication system according to an embodiment of the present disclosure.
FIG. 10 illustrates a method of reconfiguring SSB transmission through dynamic signaling of a wireless communication system according to an embodiment of the present disclosure.
FIG. 11 illustrates a method of reconfiguring a BWP and a BW through dynamic signaling of a wireless communication system according to an embodiment of the present disclosure.
FIG. 12 illustrates a method of reconfiguring DRX through dynamic signaling of a wireless communication system according to an embodiment of the present disclosure.
FIG. 13 illustrates an example of describing a DTx method for base station energy saving according to an embodiment of the present disclosure.
FIG. 14 illustrates an example of describing an operation of a base station according to a gNB wake-up signal according to an embodiment of the present disclosure.
FIG. 15 illustrates an antenna adaptation method of the base station for energy saving of a wireless communication system according to an embodiment of the present disclosure.
FIG. 16 is a diagram illustrating an example of an on-demand SIB1 operation considering multiple cells of the base station and the UE according to an embodiment of the present disclosure.
FIG. 17 is a diagram illustrating an example of an on-demand SIB1 operation considering single cells of the base station and the UE according to an embodiment of the present disclosure.
FIG. 18 is a flowchart of a UE operation that applies an energy saving method in a wireless communication system according to an embodiment of the present disclosure.
FIG. 19 is a flowchart of a base station operation that applies an energy saving method in a wireless communication system according to an embodiment of the present disclosure.
FIG. 20 is a block diagram of the terminal according to an embodiment of the present disclosure.
FIG. 21 is a block diagram of the base station according to an embodiment of the present disclosure.

### [Mode for the Invention]

Hereinafter, embodiments of the present disclosure are described in detail with reference to the accompanying drawings.

In describing embodiments of the present disclosure, a description will be omitted of the technical content that is well known in the technical field, to which the present disclosure pertains, and is not directly related to the present disclosure. This is to make the subject of the present disclosure more clear without ambiguity thereof by omitting an unnecessary description.

For the same reason, some components are exaggerated, omitted, or schematically illustrated in the accompanying drawings. Further, the size of each component does not totally reflect the actual size. In each drawing, the same reference numeral is assigned to the same or corresponding component.

Advantages and features of the present disclosure and methods of achieving the same will become clear with reference to the accompanying drawings and embodiments described below in detail. However, the present disclosure is not limited to embodiments described below, and may be implemented in various different forms, and the embodiments are provided to make the present disclosure complete and to completely inform those skilled in the art to which the present disclosure belongs of the scope of the technical idea, and the present disclosure is defined only by the scope of the claims. Through the specification, the same reference numeral refers to the same component. The terms as described below are defined in consideration of the functions in the present disclosure, and the meaning of the terms may vary according to the intention of a user or operator, convention, or the like. Therefore, the definitions of the terms should be made based on the contents throughout the specification.

Hereinafter, a base station is the entity that allocates resources to the UE, and may be at least one of a gNode B, an eNode B, a Node B, a base station (BS), a radio access unit, a base station controller, and a node on a network. The UE may include a user equipment (UE), a mobile station (MS), a cellular phone, a smart phone, a computer, or a multimedia system capable of performing a communication function. In the present disclosure, "downlink (DL)" refers to a wireless transmission path of a signal that the BS transmits to the UE, and "uplink (UL)" refers to a wireless transmission path of a signal that the UE transmits to the BS.

Further, an LTE or LTE-A system may be described hereinafter as an example, but embodiments of the present disclosure may be applied to other communication systems having a similar technical background or channel form. For example, 5^{th} generation mobile communication technology (5G, new radio, or NR) developed after LTE-A may be included therein, and the 5G below may be the concept including the existing LTE and LTE-A, and similar other services. In addition, the present disclosure may be applied to other communication systems through some modifications without departing from the scope of the present disclosure, based on a determination by those skilled in the art.

At this time, it will be understood that each block of the flowchart illustrations and combinations of the flowchart illustrations can be implemented by computer program instructions. These computer program instructions may be loaded onto a general-purpose computer, special-purpose computer, or processor of other programmable data-processing apparatuses, such that the instructions which execute on the computer or the processor of other programmable data-processing apparatuses create a means for implementing the functions specified in the flowchart block(s). These computer program instructions may also be stored in a computer-available or computer-readable memory that can direct a computer or other programmable data-processing apparatus to perform functions in a particular manner such that the instructions stored in the computer-available or computer-readable memory produce an article of manufacture including instruction means for performing the function specified in the flowchart block(s). The computer program instructions may also be loaded onto a computer or other programmable data-processing apparatus to cause a series of operational steps to be performed on the computer or other programmable data-processing apparatus to produce a computer-implemented process such that the instructions executed on the computer or other programmable data-processing apparatus provide steps for implementing the functions specified in the flowchart block(s).

In this regard, each block may represent a module, segment, or portion of code, which includes one or more executable instructions for implementing the specified logical function(s). It should also be noted that, in some alternative implementations, the functions noted in the blocks may occur out of the order. For example, two blocks shown in succession may, in fact, be executed substantially concurrently, or the blocks may sometimes be executed in the reverse order, depending upon the functionality involved.

The term "unit (or ~er)" used in the present disclosure refers to a software or hardware component such as a field-programmable gate array (FPGA) or an application specific integrated circuit (ASIC), and the "unit (or ~er)" may play any role. However, the "unit (or ~er)" is not limited to software or hardware. The "unit" (or "~er") may be configured to be present in an addressable storage medium, and may also be configured to run one or more processors. Accordingly, for example, the "unit" (or "~er") includes software components, object-oriented software components, components such as class components and task components, processes, functions, attributes, procedures, subroutines, segments of program code, drivers, firmware, microcode, circuits, data, databases, data structures, tables, arrays, and variables. Functions provided in the components and the "unit" (or "~er") may be combined into a smaller number of components and the "units" (or "~ers") or further divided into a larger number of additional components and "units" (or "~ers"). In addition, the components and the "units" (or "~ers") may be implemented to run on one or more CPUs in a device or secure multimedia card. Further, the unit" (or "~er") may include one or more processors in embodiments.

Hereinafter, a method and an apparatus proposed in embodiments of the present disclosure are not limited to be applied to each embodiment, and may use an embodiment obtained by combining all or some of one or more embodiments proposed in the present disclosure. Accordingly, embodiments of the present disclosure may be applied through some modifications without significantly departing from the scope of the present disclosure by determination of a person with ordinary technical knowledge.

A wireless communication system has developed into a broadband wireless communication system that provides a high-speed and high-quality packet data service, such as communication standards, for example, high speed packet access (HSPA) of 3GPP, long term evolution (LTE) or evolved universal terrestrial radio access (E-UTRA), LTE-advanced (LTE-A), LTE-Pro, high rate packet data (HRPD) of 3GPP2, ultra mobile broadband (UMB), and 802.17e of IEEE beyond the initially provided voice-based service.

An LTE system, which is a representative example of the broadband wireless communication system, employs an orthogonal frequency-division multiplexing (OFDM) scheme for a downlink (DL), and employs a single-carrier frequency-division multiple access (SC-FDMA) scheme for an uplink (UL). The uplink is a radio link through which a terminal (hereinafter, referred to as a user equipment (UE)) (or a mobile station (MS)) transmits data or a control signal to a base station (an eNode B (eNB) or a base station (BS)), and the downlink is a radio link through which the BS transmits data or a control signal to the UE. Further, in the above-described multi-access scheme, typically, time-frequency resources for carrying data or control information are allocated and operated in a manner to prevent overlapping of resources, that is, to establish orthogonality, between respective users so as to identify data or control information of each user.

A 5G communication system that is a communication system after LTE should support a service that simultaneously meets various requirements to freely reflect the various requirements of users and service providers. Services considered for the 5G communication system are enhanced mobile broadband (eMBB), massive machine-type communication (mMTC), and ultra-reliability low-latency communication (URLLC).

The eMBB aims to provide a data transmission rate that is improved so as to surpass the data transmission rate supported by LTE, LTE-A, or LTE-Pro. For example, in the 5G communication system, the eMBB should provide a peak data rate of 20 Gbps in the downlink and a peak data rate of 10 Gbps in the uplink from the viewpoint of a single BS. Further, the 5G communication system should provide not only the peak data rate but also an increased user perceived data rate. In order to meet such requirements, improvement of various transmission and reception technologies, including a further improved multi input multi output (MIMO) transmission technology, may be needed. Further, while a signal is transmitted using a maximum of transmission bandwidths of 20 MHz in bands of 2 GHz in the LTE system, the 5G communication system uses frequency bandwidths wider than 20 MHz in frequency bands of 3 to 6 GHz or higher than or equal to 6 GHz, whereby the data transmission rate required by the 5G communication system can be met.

Also, in order to support an application service such as the Internet of things (IoT), mMTC is considered in the 5G communication system. The mMTC needs to support access by massive numbers of UEs within a cell, improving coverage of the UE, increasing battery lifetime, and reducing the costs of the UE in order to efficiently support IoT. IoT is attached to various sensors and devices to provide a communication function, and thus should be able to support a large number of UEs (e.g., 1,000,000 UEs/km²) within the cell. Further, since the UE supporting mMTC is highly likely to be located in a shade area, such as a basement of a building, which a cell cannot cover due to the service characteristics thereof, the wider coverage than other services provided by the 5G communication system is required. The UE supporting mMTC should be produced at low cost, and it is difficult to frequently exchange a battery of the UE, so a very long battery lifetime, for example, 10 to 16 years, is required.

Last, the URLLC is a cellular-based wireless communication service used for a particular (mission-critical) purpose. For example, services used for remote control of robots or machinery, industrial automation, unmanned aerial vehicles, remote health care, or emergency alerts may be considered. Accordingly, communication provided by the URLLC should provide very low latency and very high reliability. For example, services supporting the URLLC should meet a radio access delay time (air interface latency) shorter than 0.5 milliseconds and also should meet requirements of a packet error rate equal to or smaller than 10⁻⁵. Accordingly, for services supporting the URLLC, the 5G system should provide a transmit time interval (TTI) smaller than that of other services and also should allocate wide resources in a frequency band in order to guarantee reliability of a communication link.

Three services of the 5G communication system (hereinafter, interchangeably used with the 5G system), that is, eMBB, URLLC, and mMTC may be multiplexed and transmitted in one system. In order to meet different requirements of the respective services, different transmission and reception schemes and transmission and reception parameters may be used for the respective services.

Hereinafter, the frame structure of the 5G system will be described in more detail with reference to the drawings. Hereinafter, the configuration of the 5G system will be described for convenience of description as an example of the wireless communication system to which the present disclosure is applied, but embodiments of the present disclosure may be applied, in the same or similar way, to 5G or higher systems or other communication systems to which the present disclosure can be applied.

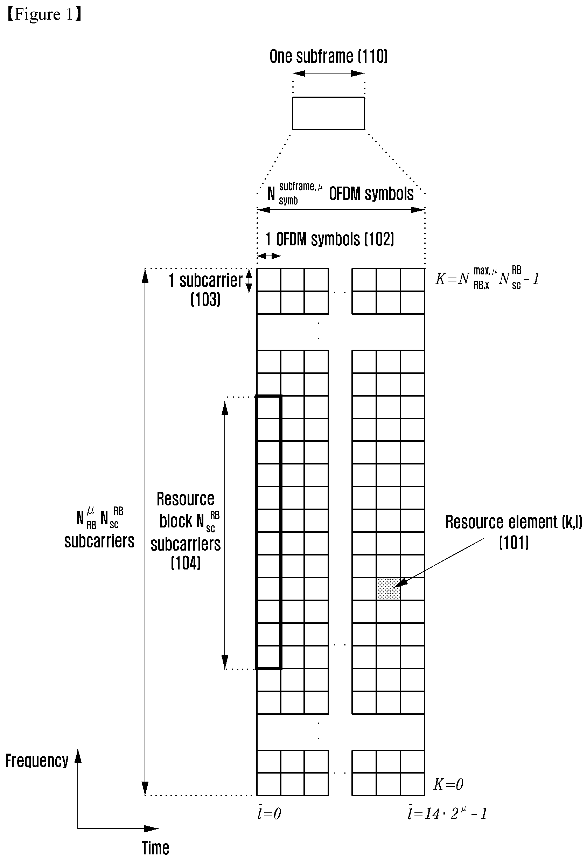

FIG. 1 illustrates the basic structure of a time-frequency domain that is a radio resource area in a wireless communication system according to an embodiment of the present disclosure.

In FIG. 1, the horizontal axis indicates a time domain, and the vertical axis indicates a frequency domain. A basic unit of resources in the time and frequency domains is a resource element (RE) 101 and may be defined as 1 orthogonal frequency division multiplexing (OFDM) symbol (or discrete Fourier transform spread OFDM (DFT-s-OFDM) symbol) 102 in the time axis and 1 subcarrier 103 in the frequency axis. ${N}_{SC}^{RB}$ (e.g., 12) consecutive REs indicating the number of subcarriers per resource block (RB) in the frequency domain may constitute one resource block (RB) 104. Further, ${N}_{symb}^{subframe , μ}$ consecutive OFDM symbols indicting the number of symbols per subframe according to a configuration value µ for subcarrier spacing in the time domain may constitute one subframe 110.

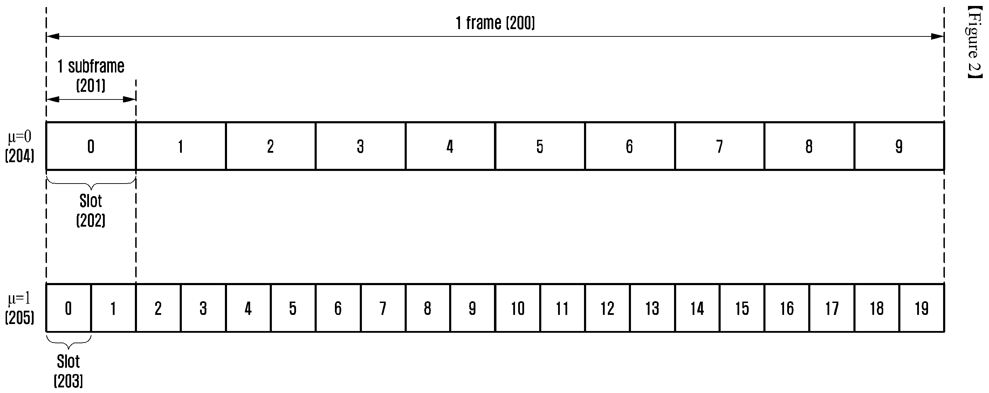

FIG. 2 illustrates the slot structure considered in the wireless communication system according to an embodiment of the present disclosure.

In FIG. 2, an example of the slot structure including a frame 200, a subframe 201, and slots 202 and 203 is illustrated. One frame 200 may be defined as 10 ms. One subframe 201 may be defined as 1 ms, and accordingly, one frame 200 may be constituted by a total of 10 subframes 201. One slot 202 or 203 may be defined as 14 OFDM symbols (that is, the number ${N}_{symb}^{slot}$ of symbols per slot =14). One subframe 201 may be constituted by one or a plurality of slots 202 and 203, and the number of slots 202 or 203 per subframe 201 may vary depending on a configuration value µ 204 or 205 for subcarrier spacing (SCS).

The slot structure in the cases where the subcarrier spacing configuration value is µ=0 204 and µ=1 205 is illustrated. One subframe 201 may be constituted by 1 slot 202 in the case of µ=0 204, and one subframe 201 may be constituted by two slots (e.g., including the slot 203) in the case of µ=1 205. That is, the number ${N}_{slot}^{subframe , μ}$ of slots per subframe may vary depending on the configuration value µ for subcarrier spacing, and the number ${N}_{slot}^{frame , μ}$ of slots per frame may vary depending on the same. For example, ${N}_{slot}^{subframe , μ}$ and ${N}_{slot}^{frame , μ}$ according to each subcarrier spacing configuration µ may be defined as [Table 1] below.

**[Table 1]**

| ***µ*** | ${N}_{symb}^{slot}$ | ${N}_{slot}^{frame , μ}$ | ${N}_{slot}^{subframe , μ}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |
| 6 | 14 | 640 | 64 |

In the 5G wireless communication system, a synchronization signal block (SSB) (interchangeable with an SS block or an SS/PBCH block) may be transmitted for initial access of the UE, and the synchronization signal block may include a primary synchronization signal (PSS), a secondary synchronization signal (SSS), and a physical broadcast channel (PBCH).

In an initial access step in which the UE initially accesses the system, the UE may first acquire synchronization of downlink time and frequency domains from the synchronization signal through a cell search and acquire a cell ID. The synchronization signal may include a PSS and an SSS. Further, the UE may receive a PBCH for transmitting a master information block (MIB) from the BS and acquire system information related to transmission and reception, such as a system bandwidth or relevant control information, and a basic parameter value. Based on the information, the UE may decode a physical downlink control channel (PDCCH) and a physical downlink shared channel (PDSCH) to acquire a system information block (SIB). Thereafter, the UE may exchange identification-related information of the BS and the UE through a random access step and initially access the network through registration and authentication steps. In addition, the UE may receive system information (system information block (SIB)) transmitted by the BS and acquire cell common transmission and reception-related control information. The cell common transmission and reception-related control information may include random access-related information, paging-related control information, common control information of various physical channels, and the like.

The synchronization signal is a signal that is a reference of a cell search, and subcarrier spacing may be applied to fit a channel environment such as phase noise or the like in each frequency band. In the case of a data channel or a control channel, in order to support the above-described various services, subcarrier spacing may be differently applied according to a service type.

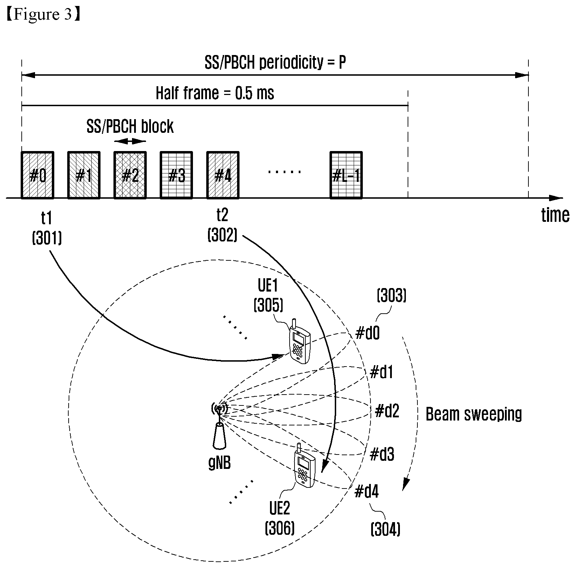

FIG. 3 illustrates a time domain mapping structure of a synchronization signal and an example of a beam sweeping operation according to an embodiment of the present disclosure.

The following components may be defined for description.
- Primary synchronization signal (PSS): indicates a signal that is a reference of DL time/frequency synchronization and provides some information of a cell ID.
- Secondary synchronization signal (SSS): is a reference of DL time/frequency synchronization and provides some pieces of the remaining information of the cell ID. In addition, the SSS serves as a reference signal for demodulation of a PBCH.
- Physical broadcast channel (PBCH): provides a master information block (MIB) that is necessary system information required for transmitting and receiving a data channel and a control channel by the UE. The necessary system information may include search space-related control information indicating radio resource mapping information of a control channel, scheduling control information for a separate data channel for transmitting system information, and information on a system frame number (SFN) corresponding to a frame unit index that is a timing reference or the like.
- Synchronization signal/PBCH block (SS/PBCH block or SSB): SS/PBCH block consists of N OFDM symbols and is constituted by a combination of a PSS, an SSS, and a PBCH. In the case of a system to which the beam sweeping technology is applied, the SS/PBCH block is the minimum unit to which beam sweeping is applied. In the 5G system, N may be 4 (N=4). The BS may transmit a maximum of L SS/PBCH blocks, and the L SS/PBCH blocks may be mapped within a half frame (0.5 ms). Further, the L SS/PBCH blocks are periodically repeated in units of predetermined periodicity P. The BS may inform the UE of the periodicity P through signaling. If there is no separate signaling for the periods P, the UE applies a pre-appointed default value.

Referring to FIG. 3, with the passage of time, beam sweeping may be applied in units of SS/PBCH blocks. In the case of UE1 305, an SS/PBCH block is received using a beam radiated in direction #d0 303 by beamforming applied to SS/PBCH block #0 at a time point t1 301. Further, UE2 306 receives an SS/PBCH block by using a beam radiated in direction #d4 304 by beamforming applied to SS/PBCH block #4 at a time point t2 302. The UE may acquire, from the BS, an optimal synchronization signal through a beam radiated in the direction in which the UE is located. For example, UE1 305 has difficulty in acquiring time/frequency synchronization and necessary system information from the SS/PBCH block through the beam radiated in direction #d4, far away from the location of UE1.

In addition to the initial access procedure, the UE may receive the SS/PBCH block in order to determine whether a radio link quality of the current cell is maintained at a predetermined level or higher. Further, during a handover procedure in which the UE moves access from the current cell to an adjacent cell, the UE may receive an SS/PBCH block of the adjacent cell in order to determine a radio link quality of the adjacent cell and acquire time/frequency synchronization of the adjacent cell.

Hereinafter, the cell initial access operation procedure of the 5G wireless communication system is described in more detail with reference to the drawings.

The synchronization signal is a signal which is the reference of the cell search, and may be transmitted with the application of subcarrier spacing suitable for a channel environment (e.g., phase noise) for each frequency band. The 5G BS may transmit a plurality of synchronization signal blocks according to the number of analog beams to be operated. For example, the PSS and the SSS may be mapped to and transmitted over 12 RBs, and the PBCH may be mapped to and transmitted over 24 RBs. Hereinafter, the structure in which the synchronization signal and the PBCH are transmitted in the 5G communication system is described.

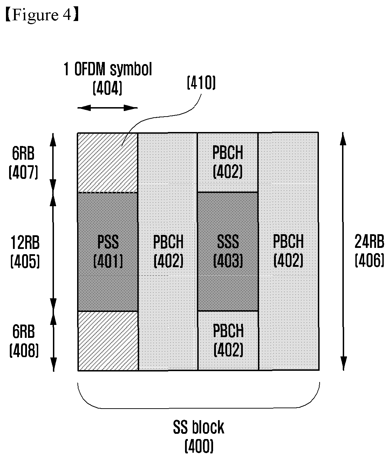

FIG. 4 illustrates a synchronization signal block considered in the wireless communication system according to an embodiment of the present disclosure.

Referring to FIG. 4, a synchronization signal block (SS block) 400 may include a PSS 401, an SSS 403, and a physical broadcast channel (PBCH) 402.

The synchronization signal block 400 may be mapped to 4 OFDM symbols 404 in the time axis. The PSS 401 and the SSS 403 may be transmitted in 12 RBs 405 in the frequency axis and first and third OFDM symbols in the time axis, respectively. In the 5G system, for example, a total of 1008 different cell IDs may be defined. According to a physical cell ID (PCI) of the cell, the PSS 401 may have 3 different values and the SSS 403 may have 336 different values. The UE may acquire one of (336X3=) 1008 cell IDs as a combination thereof through the detection of the PSS 401 and the SSS 403. This may be expressed as [Equation 1] below. [Equation 1] ${N}_{ID}^{cell} = 3 {N}_{ID}^{\left(1\right)} + {N}_{ID}^{\left(2\right)}$

Here, ${N}_{ID}^{\left(1\right)}$ may be estimated from the SSS 403 and may have a value between 0 and 335. ${N}_{ID}^{\left(2\right)}$ may be estimated from the PSS 401 and may have a value between 0 and 2. The UE may estimate a value of ${N}_{ID}^{\left(cell\right)}$ which is a cell ID, based on a combination of ${N}_{ID}^{\left(1\right)}$ and ${N}_{ID}^{\left(2\right)}$.

The PBCH 402 may be transmitted in resources including 6 RBs 407 and 408 on both sides except for 12 RBs 405 in the middle in which the SSS 403 is transmitted in 24 RBs 406 in the frequency axis and second to fourth OFDM symbols of the SS block in the time axis. The PBCH 402 may include a PBCH payload and a PBCH demodulation reference signal (DMRS), and various pieces of system information called an MIB may be transmitted in the PBCH payload. For example, the MIB may include information as in [Table 2] below.

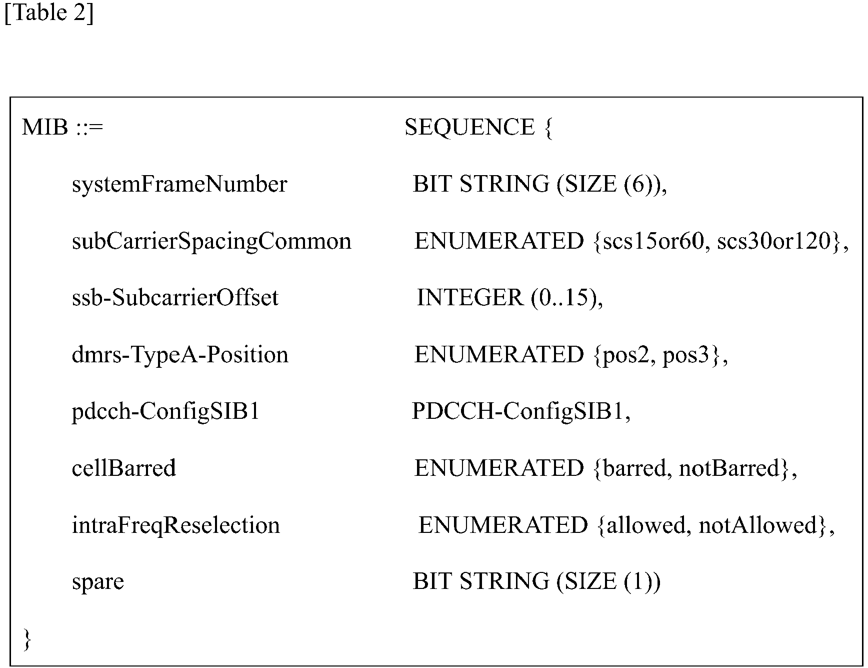

- Synchronization signal block information: an offset in the frequency domain of the synchronization signal block may be indicated through 4-bit ssb-SubcarrierOffset within the MIB. An index of the synchronization signal block including the PBCH may be indirectly acquired through decoding of the PBCH DMRS and the PBCH. In an embodiment, 3 bits acquired through decoding of the PBCH DMRS may indicate a synchronization signal block index in a frequency band lower than 6 GHz, and a total of 6 bits including 3 bits acquired through decoding of the PBCH DMRS and 3 bits included in the PBCH payload and acquired through decoding of the PBCH may indicate a synchronization signal block index including the PBCH in a frequency band higher than or equal to 6 GHz.
- Physical downlink control channel (PDCCH) configuration information: subcarrier spacing of a common downlink control channel may be indicated through 1 bit (subCarrierSpacingCommon) within the MIB, and time-frequency resource configuration information of a control resource set (CORESET) and a search space (SS) may be indicated through 8 bits (pdcch-ConfigSIB1).
- System frame number (SFN): 6 bits (systemFrameNumber) may be used to indicate some of the SFN in the MIB. 4 bits of the least significant bits (LSB) of the SFN may be included in the PBCH payload and the UE may indirectly acquire the same through decoding of the PBCH.
- Timing information within a radio frame: the UE may indirectly identify whether a synchronization signal block is transmitted in a first or second half frame of the radio frame, based on the above-described synchronization signal block index and 1 bit (half frame) included in the PBCH payload and acquired through decoding of the PBCH.

Since a transmission bandwidth (12 RBs) 405 of the PSS 401 and the SSS 403 and a transmission bandwidth (24 RBs) 406 of the PBCH 402 are different, there are 6 RBs 407 and 408 on both sides except for 12 RBs in the middle in which the PSS 401 is transmitted in the first OFDM symbol in which the PSS 401 is transmitted within the transmission bandwidth of the PBCH 402, and thus the area may be used to transmit other signals or may be empty.

Synchronization signal blocks may be transmitted using the same analog beam. For example, all of the PSS 401, the SSS 403, and the PBCH 402 may be transmitted through the same beam. Analog beams have characteristics that cannot be applied differently to the frequency axis, and thus the same analog beam may be applied to all RBs in the frequency axis within a specific OFDM symbol to which a specific analog beam is applied. For example, all of the four OFDM symbols for transmitting the PSS 401, the SSS 403, and the PBCH 402 may be transmitted through the same analog beam.

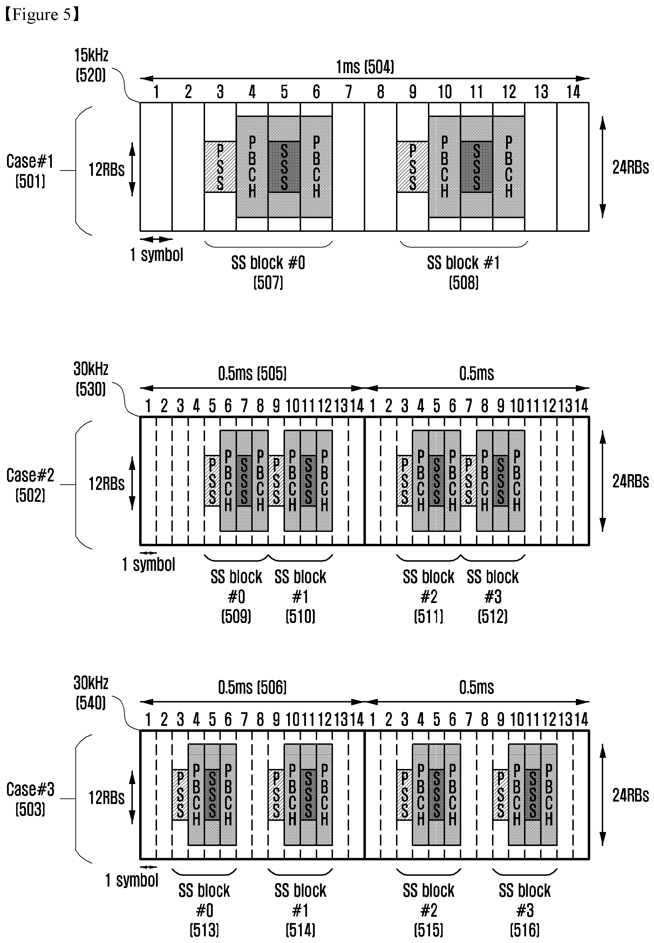

FIG. 5 illustrates various cases of transmission of a synchronization signal block in a frequency band lower than 6 GHz considered in the wireless communication system according to an embodiment of the present disclosure.

Referring to FIG. 5, in the 5G communication system, subcarrier spacing (SCS) 520 of 15 kHz and subcarrier spacing (SCS) 530 and 540 of 30 kHz may be used for synchronization signal block transmission in a frequency band equal to or lower than 6 GHz (or frequency range 1 (FR1), e.g., 410 MHz to 7125 MHz). One transmission case (e.g., case #1 501) may exist for the synchronization signal block in the subcarrier spacing 520 of 15 kHz, and two transmission cases (e.g., case #2 502 and case #3 503) may exist for the synchronization signal block in the subcarrier spacing 530 and 540 of 30 kHz.

In FIG. 5, a maximum of 2 synchronization signal blocks may be transmitted within a time of 1 ms 504 (or corresponding to 1 slot duration if 1 slot is constituted by 14 OFDM symbols) in case #1 501 in the subcarrier spacing of 15 kHz 520. In the example of FIG. 4, synchronization signal block #0 507 and synchronization signal block #1 508 are illustrated. For example, synchronization signal block #0 507 may be mapped to 4 consecutive symbols from a third OFDM symbol, and synchronization signal block #1 508 may be mapped to 4 consecutive symbols from a ninth OFDM symbol.

Different analog beams may be applied to synchronization signal block #0 507 and synchronization signal block #1 508. Further, the same beam may be applied to all of third to sixth OFDM symbols to which synchronization signal block #0 507 is mapped, and the same beam may be applied to all of ninth to twelfth OFDM symbols to which synchronization signal block #1 508 is mapped. For beams which are to be used in seventh, eighth, thirteenth, and fourteenth OFDM symbols to which no synchronization signal block is mapped, analog beams may be freely determined under determination of the BS. The analog beams may be freely determined under determination of the BS as to which beams are to be used in seventh, eighth, thirteenth, and fourteenth OFDM symbols to which no synchronization signal block is mapped.

In FIG. 5, in case #2 502 in the subcarrier spacing of 30 kHz 530, a maximum of 2 synchronization signal blocks may be transmitted within a time of 0.5 ms 505 (or corresponding to 1 slot duration if 1 slot is constituted by 14 OFDM symbols), and accordingly, a maximum of 4 synchronization signal blocks may be transmitted within a time of 1 ms (or corresponding to 2 slot duration if 1 slot is constituted by 14 OFDM symbols). In the example of FIG. 4, the case where synchronization signal block #0 509, synchronization signal block #1 510, synchronization signal block #2 511, and synchronization signal block #3 512 are transmitted within the time of 1 ms (that is, 2 slots) is illustrated. Synchronization signal block #0 509 and synchronization signal block #1 510 may be mapped to symbols from a fifth OFDM symbol and symbols from a ninth OFDM symbol of a first slot, respectively, and synchronization signal block #2 511 and synchronization signal block #3 512 may be mapped to symbols from a third OFDM symbol and symbols from a seventh OFDM symbol of a second slot, respectively.

Different analog beams may be applied to synchronization signal block #0 509, synchronization signal block #1 510, synchronization signal block #2 511, and synchronization signal block #3 512. Further, the same analog beam may be applied to fifth to eighth OFDM symbols of a first slot in which synchronization signal block #0 509 is transmitted, the same analog beam may be applied to ninth to twelfth OFDM symbols of the first slot in which synchronization signal block #1 510 is transmitted, the same analog beam may be applied to third to sixth symbols of a second slot in which synchronization signal block #2 511 is transmitted, and the same analog beam may be applied to seventh to tenth symbols of a second slot in which synchronization signal block #3 512 is transmitted. For beams to be used for OFDM symbols to which no synchronization signal block is mapped, analog beams may be freely determined under determination of the BS. The analog beams may be freely determined under determination of the BS as to which beams are to be used in OFDM symbols to which no synchronization signal block is mapped.

In FIG. 5, in case #3 503 in the subcarrier spacing of 30 kHz 540, a maximum of 2 synchronization signal blocks may be transmitted within a time of 0.5 ms 506 (or corresponding to 1 slot duration if 1 slot is constituted by 14 OFDM symbols), and accordingly, a maximum of 4 synchronization signal blocks may be transmitted within a time of 1 ms (or corresponding to 2 slot duration if 1 slot is constituted by 14 OFDM symbols). In the example of FIG. 4, transmission of synchronization signal block #0 513, synchronization signal block #1 514, synchronization signal block #2 515, and synchronization signal block #3 516 within a time of 1 ms (that is, 2 slots) is illustrated. Synchronization signal block #0 513 and synchronization signal block #1 514 may be mapped to symbols from the third OFDM symbol and symbols from the ninth OFDM symbol of the first slot, respectively, and synchronization signal block #2 515 and synchronization signal block #3 516 may be mapped to symbols from the third OFDM symbol and symbols from the ninth OFDM symbol of the second slot, respectively.

Different analog beams may be used for synchronization signal block #0 513, synchronization signal block #1 514, synchronization signal block #2 515, and synchronization signal block #3 516. As described in the above examples, the same analog beam may be used for 4 OFDM symbols in which respective synchronization signal blocks are transmitted, and which beams are to be used in OFDM symbols to which no synchronization signal block is mapped may be freely determined under determination of the BS.

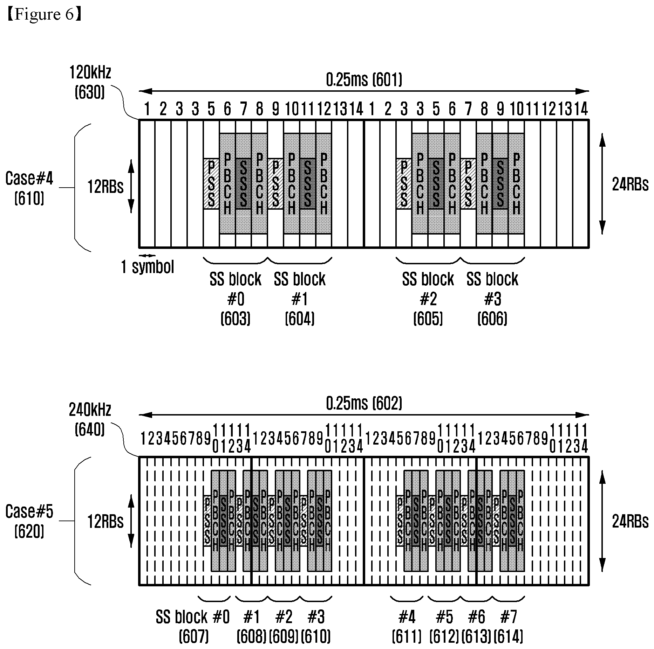

FIG. 6 illustrates cases of transmission of synchronization signal blocks in a frequency band higher than or equal to 6 GHz considered in the wireless communication system according to an embodiment of the present disclosure.

Referring to FIG. 6, in the wireless communication system, subcarrier spacing of 120 kHz 630 as an example of case #4 610 and subcarrier spacing of 240 kHz 640 as an example of case #5 620 may be used for synchronization signal block transmission in the frequency band higher than or equal to 6 GHz (or FR2, e.g., 24250 MHz-52000 MHz).

In case #4 610 of the subcarrier spacing of 120 kHz 630, a maximum of 4 synchronization signal blocks may be transmitted within a time of 0.25 ms 601 (or corresponding to 2 slot duration if 1 slot is constituted by 14 OFDM symbols). In the example of FIG. 6, the case where synchronization signal block #0 603, synchronization signal block #1 604, synchronization signal block #2 605, and synchronization signal block #3 606 are transmission within 0.25 ms (that is, two slots) is illustrated. Synchronization signal block #0 603 and synchronization signal block #1 604 may be mapped to 4 consecutive symbols from a fifth OFDM symbol and 4 consecutive symbols from a ninth OFDM symbol in a first slot, respectively, and synchronization signal block #2 605 and synchronization signal block #3 606 may be mapped to 4 consecutive symbols from a third OFDM symbol and 4 consecutive symbols from a seventh OFDM symbol in a second slot, respectively.

As described in the above embodiment, different analog beams may be used for synchronization signal block #0 603, synchronization signal block #1 604, synchronization signal block #2 605, and synchronization signal block #3 606. Further, the same analog beam may be used for all of the 4 OFDM symbols in which respective synchronization signal blocks are transmitted, and which beam are to be used for OFDM symbols to which no synchronization signal block is mapped may be freely determined under determination of the BS.

In case #5 620 of the subcarrier spacing of 240kHz 640, a maximum of 8 synchronization signal blocks may be transmitted within a time of 0.25 ms 602 (or corresponding to 4 slot duration if 1 slot is constituted by 14 OFDM symbols). In the example of FIG. 6, the case in which synchronization signal block #0 607, synchronization signal block #1 608, synchronization signal block #2 609, synchronization signal block #3 610, synchronization signal block #4 611, synchronization signal block #5 612, synchronization signal block #6 613, and synchronization signal block #7 614 are transmitted within 0.25 ms (that is, 4 slots) is illustrated.

Synchronization signal block #0 607 and synchronization signal block #1 608 may be mapped to 4 consecutive symbols from a ninth OFDM symbol and 4 consecutive symbols from a thirteenth OFDM symbol in a first slot, respectively, and synchronization signal block #2 609 and synchronization signal block #3 610 may be mapped to 4 consecutive symbols from a third OFDM symbol and 4 consecutive symbols from a seventh OFDM symbol in a second slot, respectively, and synchronization signal block #4 611, synchronization signal block #5 612, and synchronization signal block #6 613 may be mapped to 4 consecutive symbols from a fifth OFDM symbol, 4 consecutive symbols from a ninth OFDM symbol, and 4 consecutive symbols from a thirteenth OFDM symbol in a third slot, respectively, and synchronization signal block #7 614 may be mapped to 4 consecutive symbols from a third OFDM symbol in a fourth slot.

As described in the above example, different analog beams may be used for synchronization signal block #0 607, synchronization signal block #1 608, synchronization signal block #2 609, synchronization signal block #3 610, synchronization signal block #4 611, synchronization signal block #5 612, synchronization signal block #6 613, and synchronization signal block #7 614. Further, the same analog beam may be used for all of the 4 OFDM symbols in which respective synchronization signal blocks are transmitted, and which beam are to be used for OFDM symbols to which no synchronization signal block is mapped may be freely determined under determination of the BS.

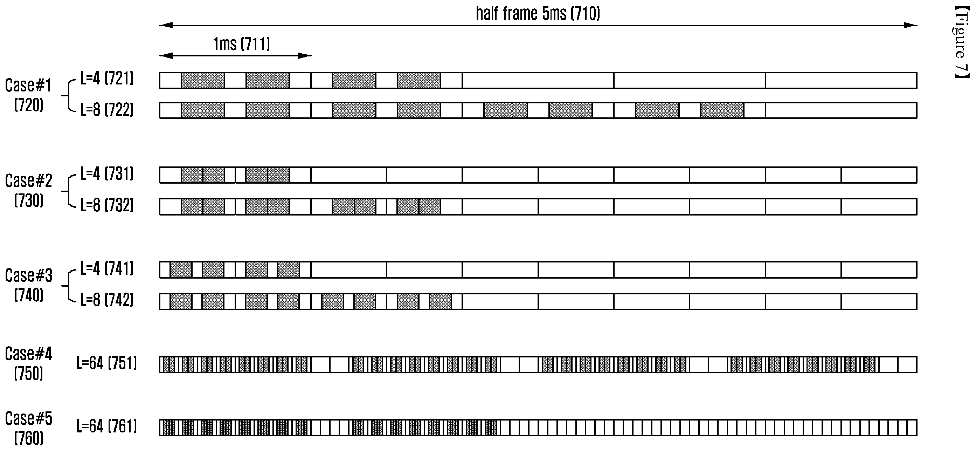

FIG. 7 illustrates cases of transmission of synchronization signal blocks according to subcarrier spacing within a time of 5 ms in the wireless communication system according to an embodiment of the present disclosure.

Referring to FIG. 7, in the 5G communication system, a synchronization signal block may be periodically transmitted, for example, in units of time intervals of 5 ms 710 (corresponding to 5 subframes or half frames).

In a frequency band equal to or lower than 3 GHz, a maximum of 4 synchronization signal blocks may be transmitted within a time of 5 ms 710. In a frequency band higher than 3 GHz and equal to or lower than 6 GHz, a maximum of 8 synchronization signal blocks may be transmitted. In a frequency band higher than 6 GHz, a maximum of 64 synchronization signal blocks may be transmitted. As described above, subcarrier spacing 15 kHz and 30 kHz may be used in the frequency equal to lower than 6 GHz.

In the example of FIG. 7, in case #1 501 in subcarrier spacing of 15 kHz constituted by 1 slot in FIG. 5, synchronization signal blocks may be mapped to a first slot and a second slot in the frequency band equal to or lower than 3 GHz and thus a maximum of 4 synchronization signal blocks 721 may be transmitted, and synchronization signal blocks may be mapped to first, second, third, and fourth slots in the frequency band higher than 3 GHz and equal to or lower than 6 GHz and thus a maximum of 8 synchronization signal blocks 722 may be transmitted. In case #2 502 or case #3 503 in subcarrier spacing of 30 kHz constituted by 2 slots in FIG. 5, synchronization signal blocks may be mapped starting from a first slot in the frequency band equal to or lower than 3 GHz and thus a maximum of 4 synchronization signal blocks 731 and 741 may be transmitted, and synchronization signal blocks may be mapped starting from to first and third slots in the frequency band higher than 3 GHz and equal to or lower than 6 GHz and thus a maximum of 8 synchronization signal blocks 732 and 742 may be transmitted.

Subcarrier spacing 120 kHz and 240 kHz may be used in the frequency band higher than 6 GHz. In the example of FIG. 7, synchronization signal blocks may be mapped starting from 1^{st}, 3^{rd}, 5^{th}, 7^{th}, 11^{th}, 13^{th}, 15^{th}, 17^{th}, 21^{st}, 23^{rd}, 25^{th}, 27^{th}, 31^{st}, 33^{rd}, 35^{th}, and 37^{th} slots in the frequency band higher than 6 GHz and thus a maximum of 64 synchronization signal blocks 751 may be transmitted in case #4 610 in subcarrier spacing of 120 kHz constituted by 2 slots in FIG. 6. In the example of FIG. 7, synchronization signal blocks may be mapped starting from 1^{st}, 5^{th}, 9^{th}, 13^{th}, 21^{st}, 25^{th}, 29^{th}, and 33^{rd} slots in the frequency band higher than 6 GHz and thus a maximum of 64 synchronization signal blocks 761 may be transmitted in case #5 620 in subcarrier spacing of 240 kHz constituted by 4 slots in FIG. 6.

The UE may acquire an SIB after performing decoding of a PDCCH and a PDSCH based on system information included in the received MIB. The SIB may include at least one of uplink cell bandwidth-related information, a random access parameter, a paging parameter, or an uplink power control-related parameter.

In general, the UE may establish a radio link with a network through a random access procedure based on synchronization with the network acquired through a cell search process of the cell and the system information. For random access, a contention-based or a contention-free scheme may be used. When the UE selects or reselects a cell during an initial access step of the cell, a contention-based random access scheme may be used, for example, for the purpose of moving from an RRC_IDLE state to an RRC_CONNECTED state. When downlink data is reached, contention-free random access may be used to reconfigure uplink synchronization in the case of handover or location measurement. [Table 3] below shows conditions (events) for triggering a random access procedure in the 5G system.

**[Table 3]**

| |
|---|
| - Initial access from RRC_IDLE; |
| - RRC Connection Re-establishment procedure; |
| - DL or UL data arrival during RRC_CONNECTED when UL synchronisation status is "non-synchronised"; |
| - UL data arrival during RRC_CONNECTED when there are no PUCCH resources for SR available; |
| - SR failure; |
| - Request by RRC upon synchronous reconfiguration (e.g. handover); |
| - RRC Connection Resume procedure from RRC_INACTIVE; |
| - To establish time alignment for a secondary TAG; |
| - Request for Other SI; |
| - Beam failure recovery; |
| - Consistent UL LBT failure on SpCell. |

Hereinafter, a measurement time configuration method for synchronization signal block (SS block or SSB)-based radio resource management (RRM) in the 5G wireless communication system is described.

The UE receives a configuration of MeasObjectNR of MeasObjectToAddModList as a configuration for SSB-based intra/inter-frequency measurements and channel state information-reference signal (CSI-RS)-based intra/inter-frequency measurements through higher-layer signaling. For example, MeasObjectNR may be configured as in [Table 4] below.

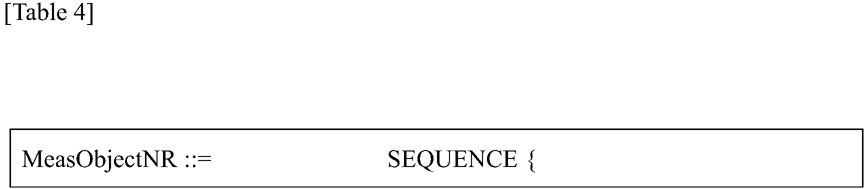

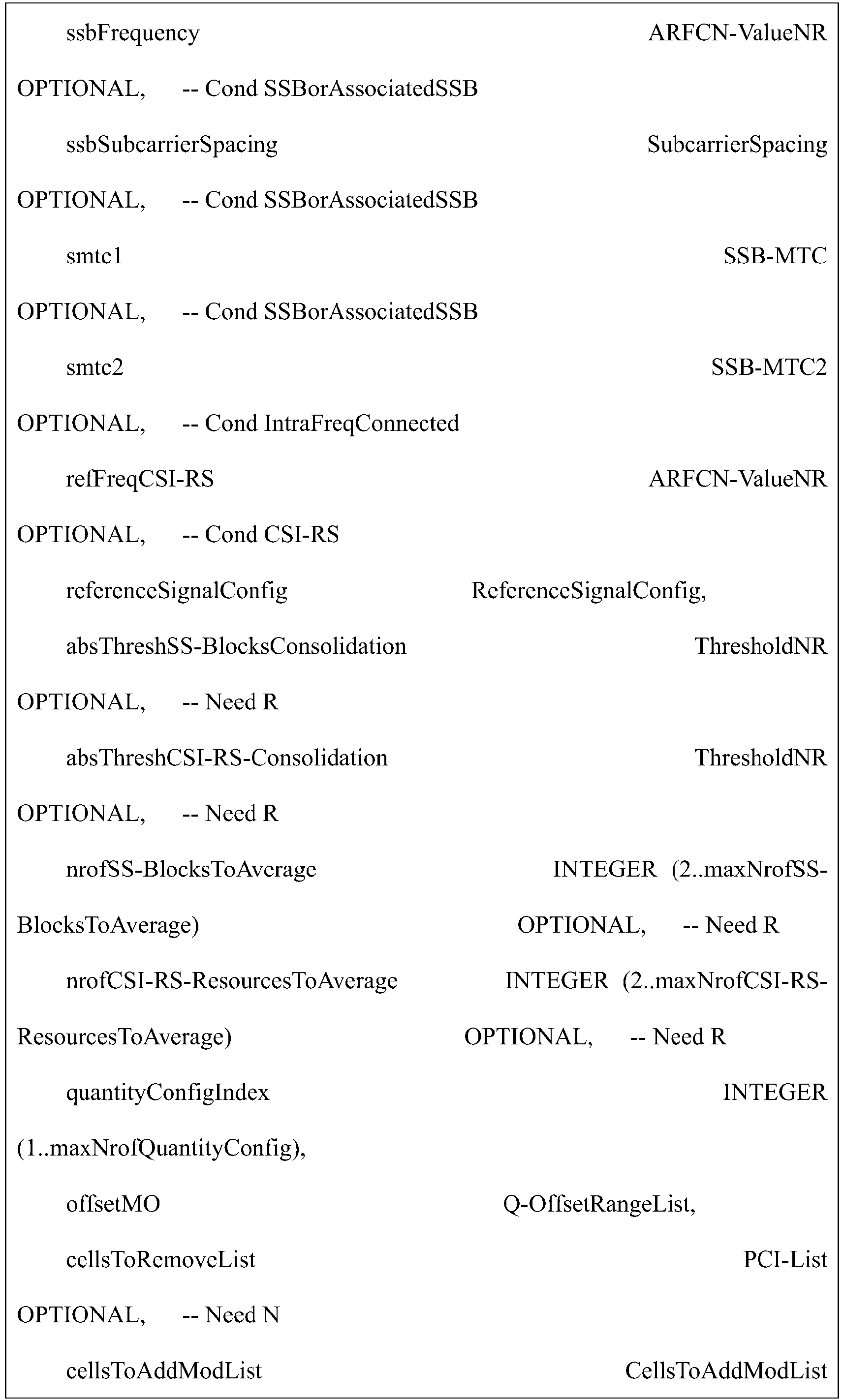

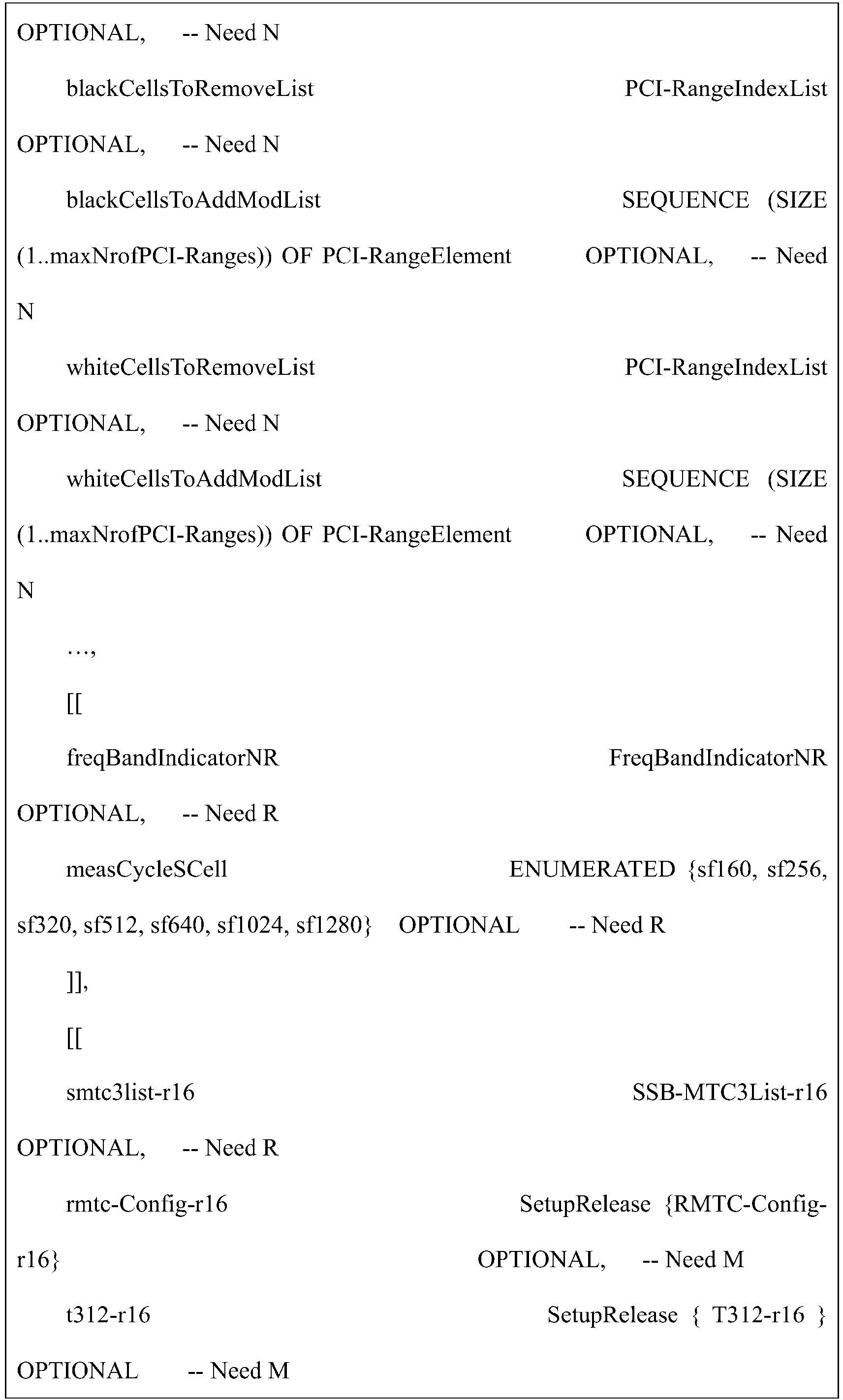

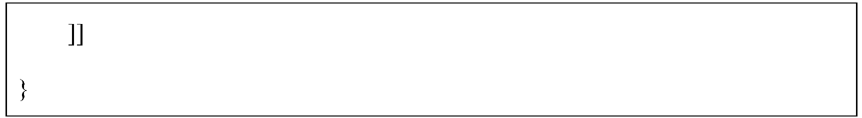

The terms in [Table 4] may perform the following functions. However, the present disclosure is not limited thereto.
- ssbFrequency: may configure a frequency of a synchronization signal related to MeasObjectNR
- ssbSubcarrierSpacing: configures subcarrier spacing of an SSB. FR1 may apply only 15 kHz or 30 kHz, and FR2 may apply only 120 kHz or 240 kHz.
- smtc1: indicates an SS/PBCH block measurement timing configuration, and may configure a primary measurement timing configuration and configure a timing offset and duration for an SSB.
- smtc2: may configure a secondary measurement timing configuration for an SSB related to MeasObjectNR having a PCI listed in a pci-List.

In addition, the configuration may be performed through other higher-layer signaling. For example, the SMTC may be configured in the UE through SIB2 for intra-frequency, inter-frequency, and inter-RAT cell reselection or reconfigurationWithSync for NR PSCell switching and NR PCell switching, and the SMTC may also be configured in the UE through SCellConfig for NR SCell addition.

The UE may configure a first SS/PBCH block measurement timing configuration (SMTC) according to periodictiyAndOffset (providing periodicity and offset) through smtc1 configured through higher-layer signaling for SSB measurement. In an embodiment, the number of system frames (system frame number (SFN)) that meets the condition in [Table 5] is described and a first subframe of each SMTC occasion may start in the subframe of the SpCell.

**[Table 5]**

| |
|---|
| SFN mod *T =* (FLOOR (*Offset*/10)); |
| if the *Periodicity* is larger than *sf5*: |
| subframe = *Offset* mod 10; |
| else: |
| subframe = *Offset* or (*Offset +*5); |
| with *T =* CEIL(*Periodicity*/10). |

If smtc2 is configured, the UE may configure an additional SMTC according to periodicity of the configured smtc2 and an offset and duration of smtc1 for cells indicated by a value of pci-List of smtc2 in the same MeasObjectNR. In addition, the UE may receive a configuration of the smtc and measure the SSB through smtc3list for smtc2-LP (with long periodicity) and integrated access and backhaul - mobile termination (IAB-MT) for the same frequency (e.g., frequency for intra frequency cell reselection) or different frequencies (e.g., frequencies for inter frequency cell reselection). In an embodiment, the UE may not consider the SSB transmitted in the subframe other than the SMTC occasion for SSB-based RRM measurement in configured ssb-Frequency.

The BS may use various multiple transmit/receive point (TRP) operation schemes according to a serving cell configuration and a physical cell identifier (PCI) configuration. Among them, when two TRPs located at a physically separated distance have different PCIs, there may be two methods of operating the two TRPs.

### [Operation method 1]

Two TRPs having different PCIs may be operated through 2 serving cell configurations.

The BS may make a configuration by including channels and signals transmitted by different TRPs in different serving cell configurations through [Operation method 1]. That is, each TRP may have an independent serving cell configuration, and a frequency band value FrequencyInfoDL indicated by DownlinkConfigCommon within each serving cell configuration may indicate at least partially overlapping bands. The several TRPs operate based on a plurality of ServCellIndexes (e.g., ServCellIndex #1 and ServCellIndex #2) and thus each TRP can use a separate PCI. That is, the BS may allocate one PCI per ServCellIndex.

In this case, if several SSBs are transmitted by TRP 1 and TRP 2, the SSBs may have different PCIs (e.g., PCI #1 and PCI #2), and the BS may properly select a value of ServCellIndex indicated by a cell parameter in QCI-Info, map the PCI suitable for each TRP, and designate the SSB transmitted by one of TRP1 or TRP2 as a source reference RS of QCL configuration information. However, such a configuration applies one serving cell configuration which can be used for carrier aggregation (CA) of the UE to multiple TRPs, and thus there may be problem in that a degree of freedom of the CA configuration is limited or signaling burden is increased.

### [Operation method 2]

Two TRPs having different PCIs may be operated through 1 serving cell configuration.

Through [Operation method 2], the BS may configure channels and signals transmitted by different TRPs through one serving cell configuration. Since the UE operates based on one ServCellIndex (e.g., ServCellIndex #1), it is impossible to recognize a PCI (e.g., PCI #2) allocated to the second TRP. [Operation method 1] may have a degree of freedom of the CA configuration compared to the above-described [Operation method 1], but if several SSBs are transmitted by TRP 1 and TRP 2, the SSBs may have different PCIs (e.g., PCI #1 and PCI #2) and the BS may not be able to map the PCI (e.g., PCI #2) of the second TRP through ServCellIndex indicated by the cell parameter in QCL-Info. The BS may be able to only designate the SSB transmitted by TRP 1 as the source reference RS of QCL configuration information and may not be able to designate the SSB transmitted by TRP 2.

As described above, [Operation method 1] may perform multiple TRP operations for two TRPs having different PCIs through an additional serving cell configuration without additional specification support, but [Operation method 2] may operate based the following additional UE capability report and configuration information of the BS.

Related to the UE capability report for [Operation method 2]
- Through higher-layer signaling from the BS, the UE may report that a configuration for an additional PCI different from the PCI of the serving cell is possible to the BS through UE capability. The corresponding UE capability may include X1 and X2 which are two numbers independent from each other, and X1 and X2 may be reported as independent UE capabilities.
- X1 refers to the maximum number of additional PCIs which can be configured in the UE and the PCI may be different from the PCI of the serving cell, which means the case where a time domain position and periodicity of the SSB corresponding to the additional PCI are the same as those of the SSB of the serving cell.
- X2 refers to the maximum number of additional PCIs which can be configured in the UE and the PCI may be different from the PCI of the serving cell, which means the case where a time domain position and periodicity of the SSB corresponding to the additional PCI are different from those of the SSB corresponding to PCI reported as X1.
- By the definition, PCIs corresponding to values reported as X1 and X2 may not be simultaneously configured.
- The values reported as X1 and X2 reported through the UE capability report may have values of one integer from 0 to 7.
- For the values reported as X1 and X2, different values may be reported in FR1 and FR2.

Related to the higher-layer signaling configuration for [Operation method 2]
- The UE may receive a configuration of higher-layer signaling SSB-MTCAdditionalPCI-r17 from the BS, based on the above-described UE capability report, the corresponding higher-layer signaling may include a plurality of additional PCIs having different values from at least the serving cell, SSB transmission power corresponding to each additional PCI, and ssb-PositionInBurst corresponding to each additional PCI, and the maximum number of configurable additional PCIs may be 7.
- The UE may assume the center frequency, subcarrier spacing, and subframe number offset which are the same as the SSB of the serving cell as the assumption of the SSB corresponding to the additional PCI having a value different from the serving cell.
- The UE may assume that the reference RS (e.g., SSB or CSI-RS) corresponding to the PCI of the serving cell is always connected to an activated TCI state and, in the case of the additionally configured PCI having a value different from the serving cell, when the number of PCIs is one or plural, may assume that only 1 PCI among the corresponding PCIs is connected to the activated TCI state.
- If the UE receives a configuration of 2 different coresetPoolIndex, the reference RS corresponding to the serving cell PCI is connected to one or a plurality of activated TCI states, and the reference RS corresponding to the additionally configured PCI having a value different from the serving cell is connected to one or a plurality of activated TCI states, the UE may expect the activated TCI state(s) connected to the serving cell PCI to be connected to one of the 2 coresetPoolIndex and the activated TCI state(s) connected to the additionally configured PCI having the value different from the serving cell to be connected to the one remaining coresetPoolIndex.

The UE capability report and higher-layer signaling of the BS for the above-described [Operation method 2] may configure an additional PCI having a value different from the PCI of the serving cell. When the configuration does not exist, the SSB corresponding to the additional PCI having the value different from the PCI of the serving cell which cannot be designated as the source reference RS may be used for the purpose of being designated as the source reference RS of QCL configuration information. Further, unlike the SSB which can be configured to be used for the purpose of RRM, mobility, or handover such as configuration information for the SSB which can be configured in higher-layer signaling smtc1 and smtc2, the SSB may be used to serve as a QCL source RS for supporting the multi-TRP operation having different PCIs.

Subsequently, a demodulation reference signal (DMRS) which is one of the reference signals in the 5G system will be described in detail.

The DMRS is constituted by a plurality of DMRS ports, and respective ports maintain orthogonality to prevent interference therebewteen by using code division multiplexing (CDM) or frequency division multiplexing (FDM). However, the term for the DMRS may be expressed by another term according to user's intention and the usage purpose of the reference signal. The term DMRS is presented as a specific example to easily describe the technical content of the present disclosure and assist for understanding the present disclosure, and does not intend to limit the scope of the present disclosure. That is, it is apparent to those skilled in the art to which the disclosure belongs that an any reference signal can be implemented based on the technical spirit of the present disclosure.

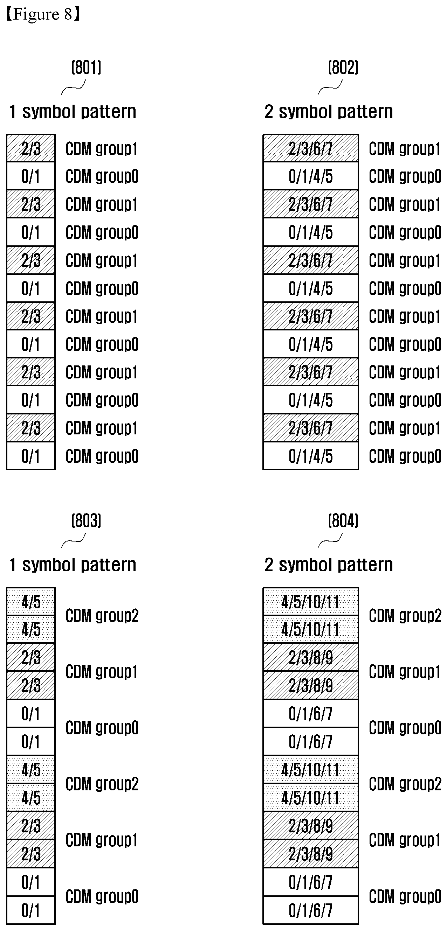

FIG. 8 illustrates an example of describing DMRS patterns (type 1 and type 2) used for communication between the BS and the UE in the wireless communication system according to an embodiment of the present disclosure.

In the 5G system, two DMRS patterns may be supported.

Referring to FIG. 8, DMRS type 1 801 and 802 are illustrated, and specifically, a 1 symbol pattern 801 and a 2 symbol pattern 802 are illustrated. DMRS type 1 801 and 802 may be constituted by two CDM groups as DMRS patterns of a comb 2 structure, and different CDM groups may be FDMed.

In the 1 symbol pattern 801, frequency CDM is applied to the same CDM group and thus two DMRS ports may be distinguished, and accordingly a total of 4 orthogonal DMRS ports may be configured. The 1 symbol pattern 801 may include a DMRS port ID mapped to each CDM group (a DMRS port ID for downlink may be expressed as an illustrated number + 1000). In the 2 symbol pattern 802, time/frequency CDM is applied to the same CDM group and thus 4 DMRS ports may be distinguished, and accordingly a total of 8 orthogonal DMRS ports may be configured. The 2 symbol pattern 802 may include a DMRS port ID mapped to each CDM group (a DMRS port ID for downlink may be expressed as an illustrated number + 1000).

Referring to FIG. 8, DMRS type 2 803 and 804 are illustrated, and three CDM groups may be configured as DMRS patterns of a structure in which frequency domain orthogonal cover codes (FD-OCC) is applied to an adjacent subcarrier in the frequency, and different CDM groups may be FDMed.

In the 1 symbol pattern 803, frequency CDM is applied to the same CDM group and thus two DMRS ports may be distinguished, and accordingly a total of 6 orthogonal DMRS ports may be configured. The 1 symbol pattern 803 may include a DMRS port ID mapped to each CDM group (a DMRS port ID for downlink may be expressed as an illustrated number + 1000). In the 2 symbol pattern 704, time/frequency CDM is applied to the same CDM group and thus 4 DMRS ports may be distinguished, and accordingly a total of 12 orthogonal DMRS ports may be configured. The 2 symbol pattern 804 may include a DMRS port ID mapped to each CDM group (a DMRS port ID for downlink may be expressed as an illustrated number + 1000).

As described above, in the NR system, different two DMRS patterns (e.g., DMRS type 1 801 and 802 or DMRS type 2 803 and 804) may be configured, and whether each DMRS pattern is one symbol pattern 801 and 803 or an adjacent two symbol pattern 802 and 804 may be configured. Further, in the NR system, not only the DMRS port number may be scheduled but also the number of CDM groups scheduled together for PDSCH rate matching may be configured and signaled. In addition, all of the above-described two DMRS patterns may be supported in the DL and the UL in the case of cyclic prefix based orthogonal frequency division multiplex (CP-OFDM), and only DMRS type 1 801 and 802 among the above-described DMRS patterns may be supported in the UL in the case of discrete Fourier transform spread OFDM (DFT-S-OFDM).

Moreover, an additional DMRS may be supported to be configurable. Among the DMRSs, a front-loaded DMRS refers to a first DMRS transmitted and received in the most front symbol in the time domain and an additional DMRS refers to a DMRS transmitted and received in the symbol later than the front-loaded DMRS in the time domain. In the NR system, the number of additional DMRSs may be configured as a minimum of 0 to a maximum of 3. Further, when the additional DMRS is configured, a pattern which is the same as the front-loaded DMRS may be assumed. In an embodiment, when information on whether the DMRS pattern type described above for the front-loaded DMRS is type 1 or type 2, information on whether the DMRS pattern is a one symbol pattern or an adjacent two symbol pattern, and information on the number of DMRS ports and used CDM groups are indicated, the additional DMRS may be assumed that the same DMRS information as the front-loaded DMRS is configured when the additional DMRS is additionally configured.

In an embodiment, the above-described downlink DMRS configuration may be configured through RRC signaling as in [Table 6] below.

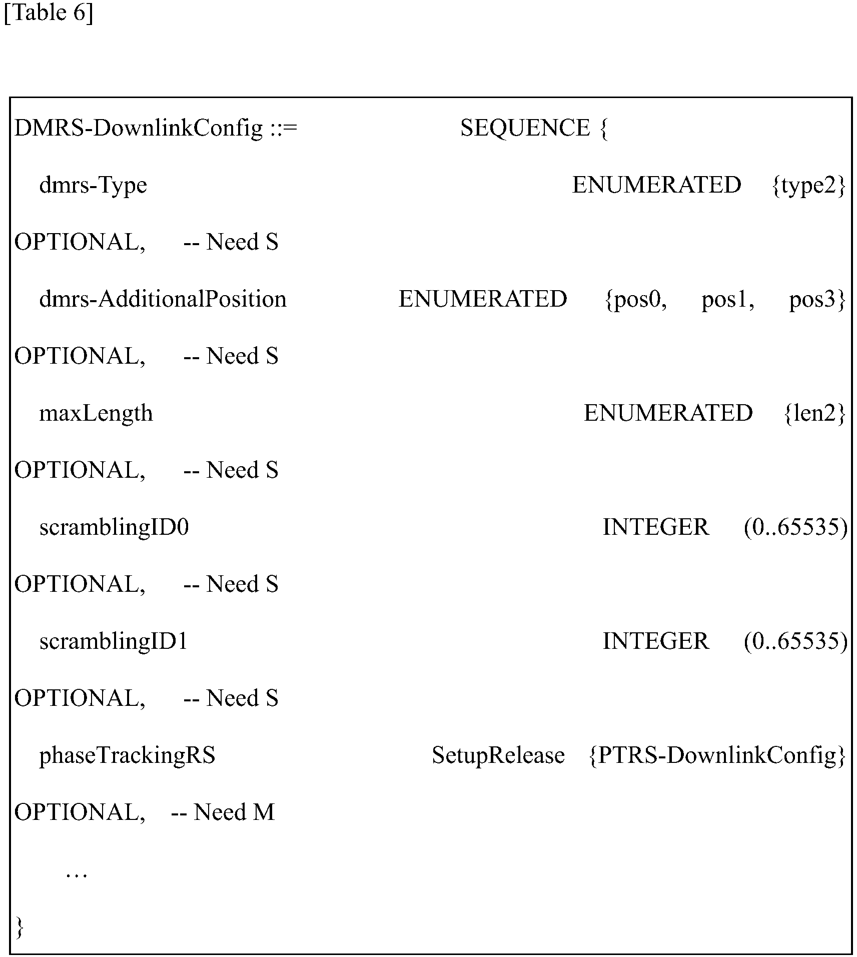

Here, dmrs-Type may configure a DMRS type, dmrs-AdditionalPosition may configure additional DMRS OFDM symbols, maxLength may configure a 1 symbol DMRS pattern or a 2 symbol DMRS pattern, scramblingID0 and scramblingID 1 may configure scrambling IDs, and phaseTrackingRS may configure a phase tracking reference signal (PTRS).

Further, the above-described uplink DMRS configuration may be configured through RRC signaling as in [Table 7] below.

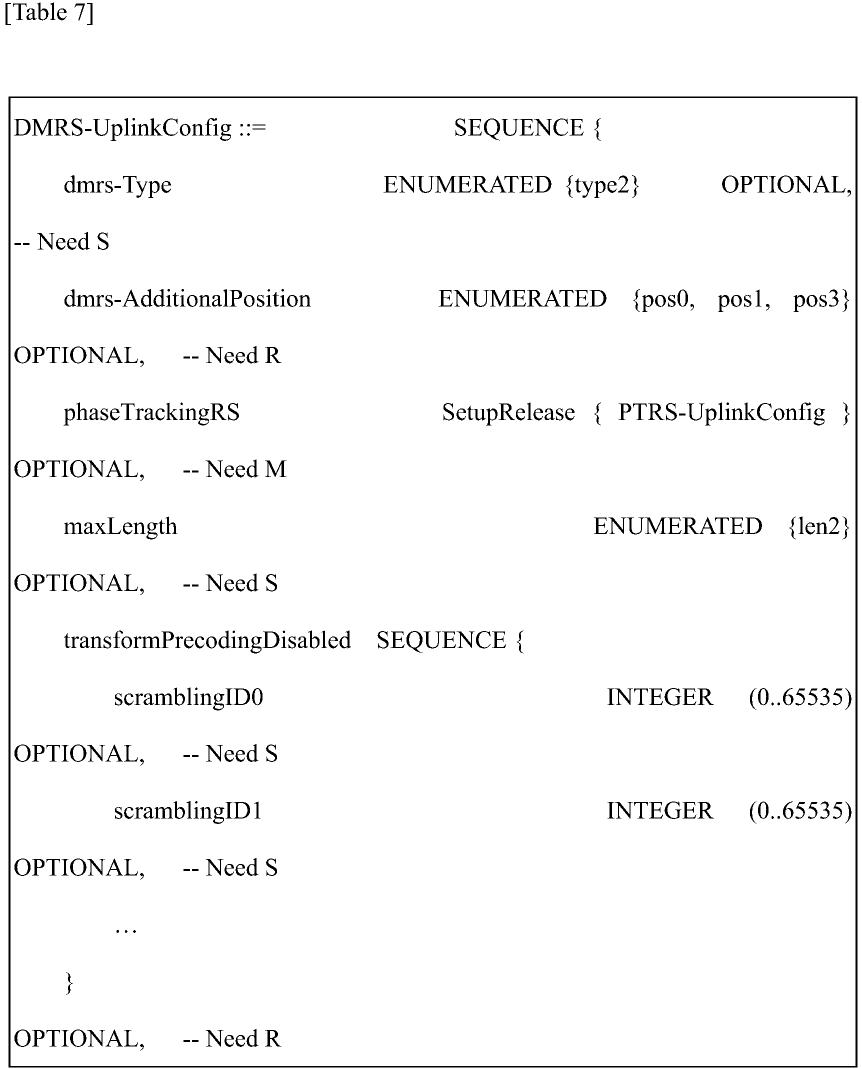

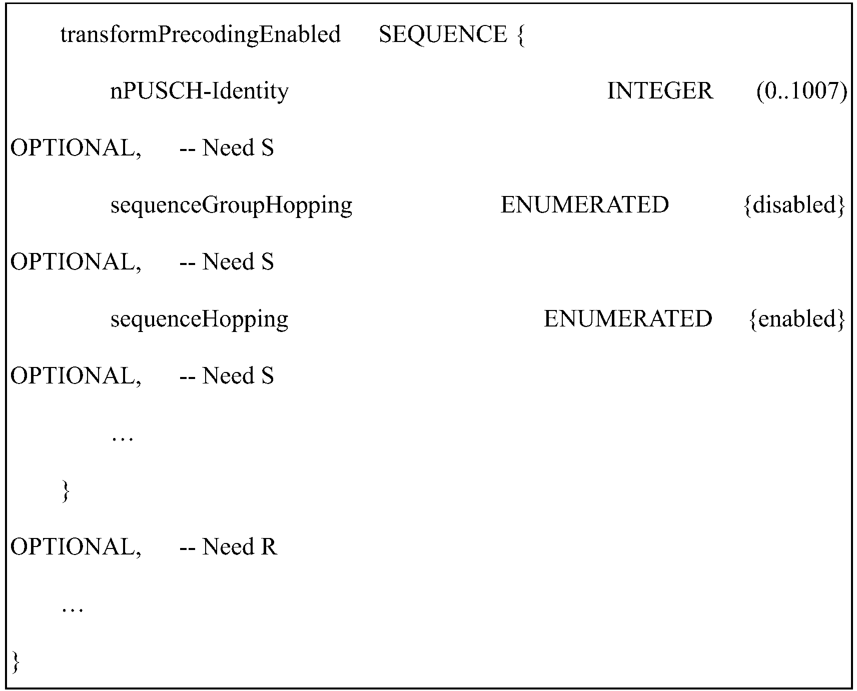

Here, dmrs-Type may configure a DMRS type, dmrs-AdditionalPosition may configure additional DMRS OFDM symbols, phaseTrackingRS may configure a PTRS, and maxLength may configure a 1 symbol DMRS pattern or a 2 symbol DMRS pattern. scramblingID0 and scramblingID1 may configure scrambling ID0, nPUSCH-Identity may configure a cell ID of DFT-s-OFDM, sequenceGroupHopping may disable sequence group hopping, and sequenceHopping may enable sequence hopping.

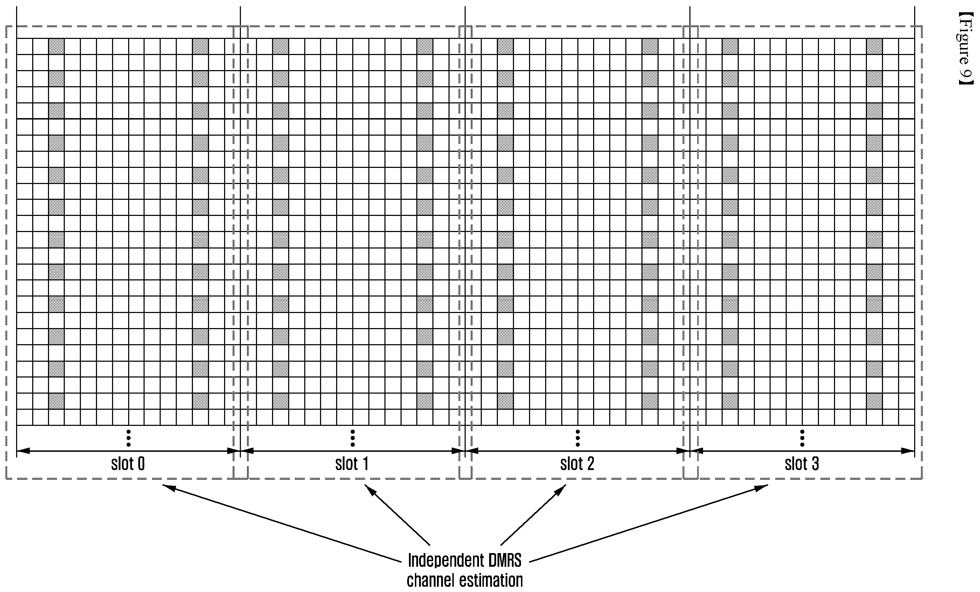

FIG. 9 illustrates an example of channel estimation using a DMRS received by one PUSCH in a time band of the wireless communication system according to an embodiment of the present disclosure.

Referring to FIG. 9, when channel estimation for data decoding is performed using a DMRS, channel estimation may be performed using physical resource blocks (PRB) bundling linked to a system band in the frequency band within a precoding resource block group (PRG) that is the corresponding bundling unit. Further, in the time unit, the channel may be estimated based on the assumption that precoding of only DMRSs received by only one PUSCH is the same.

Hereinafter, a time domain resource allocation (TDRA) method for a data channel in the 5G communication system is described. The BS may configure a time domain resource allocation information table for a downlink data channel (physical downlink shared channel (PDSCH)) and an uplink data channel (physical uplink shared channel (PUSCH)) in the UE through higher-layer signaling (e.g., RRC signaling).

The BS may configure a table constituted by a maximum of maxNrofDL-Allocations=17 entries for the PDSCH and configure a table constituted by a maximum of maxNrofUL-Allocations=17 entries for the PUSCH. The time domain resource allocation information may include, for example, at least one of PDCCH-to-PDSCH slot timing (corresponding to a time interval in units of slots between a time point at which a PDCCH is received and a time point at which a PDSCH scheduled by the received PDCCH is transmitted, and indicated by K0) or PDCCH-to-PUSCH slot timing (corresponding to a time interval in units of slots between a time point at which a PDCCH is received and a time point at which a PUSCH scheduled by the received PDCCH is transmitted, and indicated by K2), information on a location and a length of a start symbol in which the PDSCH or the PUSCH is scheduled within the slot, and a mapping type of the PDSCH or the PUSCH.

In an embodiment, the time domain resource allocation information for the PDSCH may be configured in the UE through RRC signaling as in [Table 8] below.

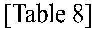

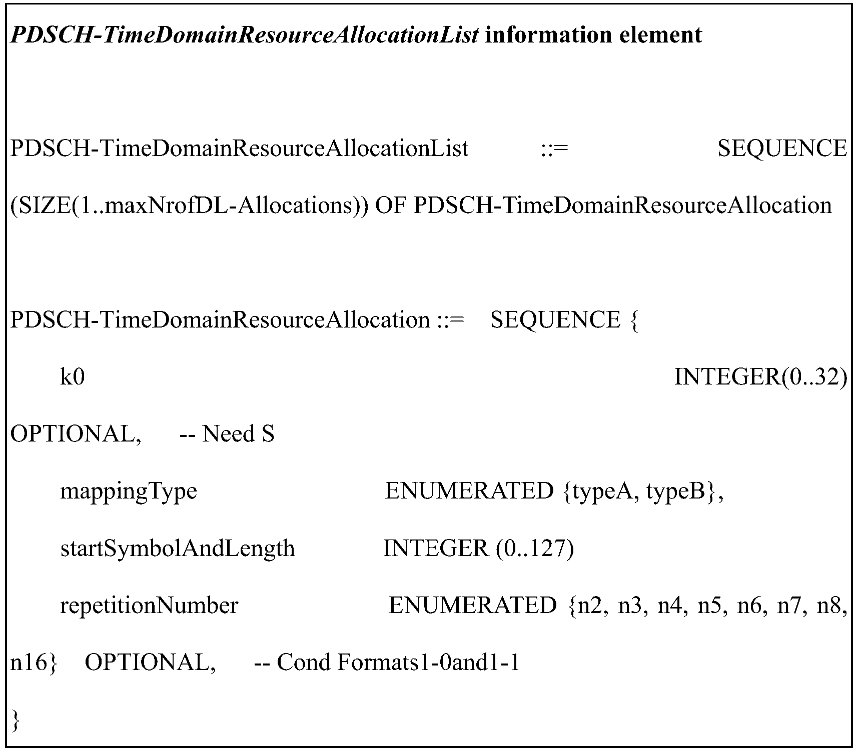

Here, k0 may indicate PDCCH-to-PDSCH timing (that is, a slot offset between DCI and the scheduled PDSCH) in units of slots, mappingType may indicate a PDSCH mapping type, startSymbolAndLength may indicate a start symbol and a length of the PDSCH, and repetitionNumber may indicate the number of PDSCH transmission occasions according to a slot-based repetition scheme.

In an embodiment, the time domain resource allocation information for the PUSCH may be configured in the UE through RRC signaling as in [Table 9] below.

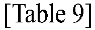

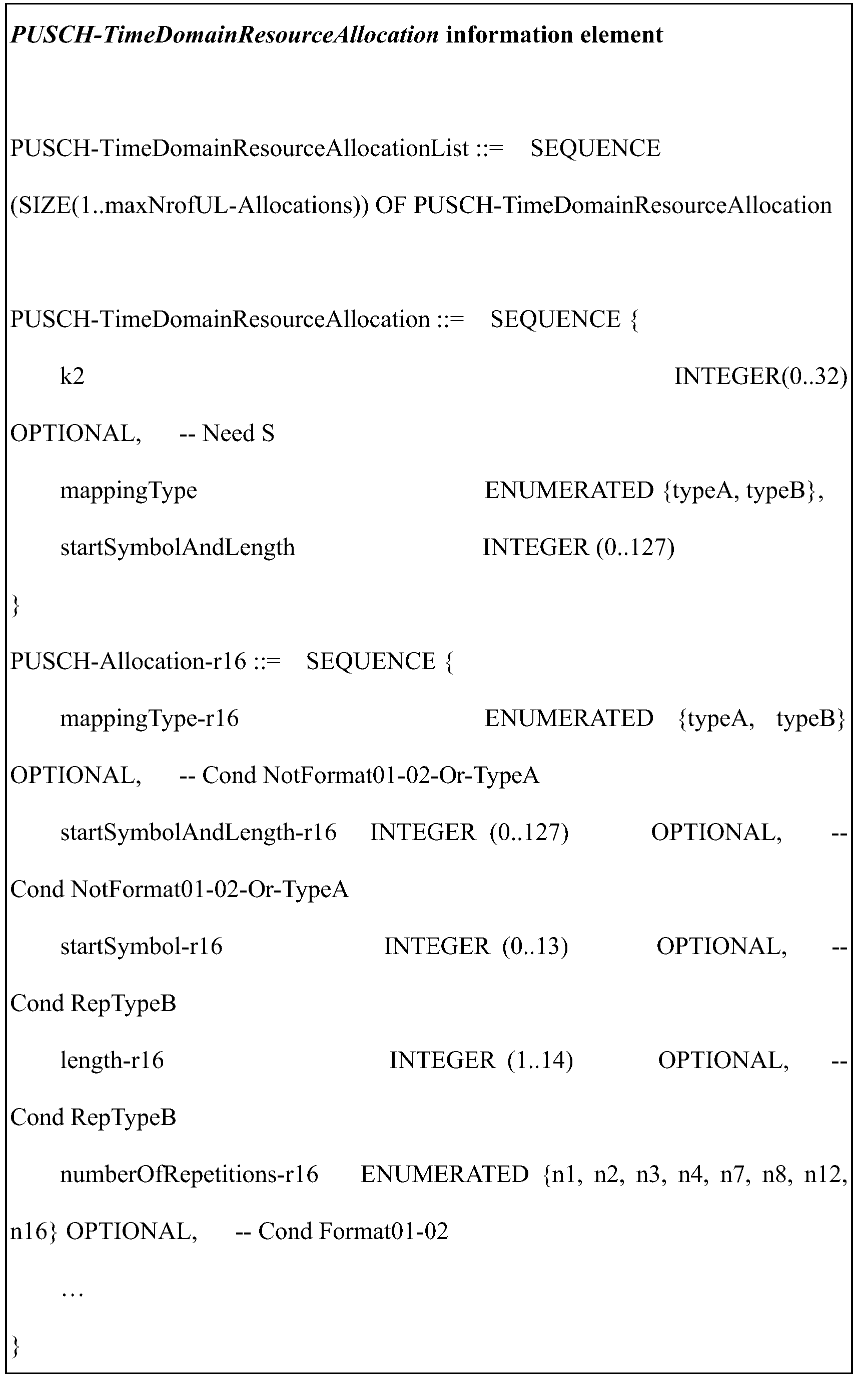

Here, k2 may indicate PDCCH-to-PUSCH timing (that is, a slot offset between DCI and the scheduled PUSCH) in units of slots, mappingType may indicate a PUSCH mapping type, startSymbolAndLength or StartSymbol and length may indicate a start symbol and a length of the PUSCH, and numberOfRepetitions may indicate the repetition number applied to PUSCH transmission.

The BS may inform the UE of at least one of the entries in the table for the time domain resource allocation information through L1 signaling (e.g., downlink control information (DCI)) (e.g., indicated through a 'time domain resource allocation' field within DCI). The UE may acquire time domain resource allocation information for a PDSCH or a PUSCH on the basis of the DCI received from the BS.

Hereinafter, transmission of an uplink data channel (physical uplink shared channel (PUSCH) is described in the 5G system. PUSCH transmission may be dynamically scheduled by UL grant (e.g., referred to as a dynamic grant (DG)-PUSCH) within DCI or may be scheduled by configured grant Type 1 or configured grant Type 2 (e.g., referred to as a configured grant (CG)-PUSCH). Dynamic scheduling for the PUSCH transmission may be indicated as, for example, DCI format 0_0 or 0_1.

The PUSCH transmission of configured grant Type 1 may be semi-statically configured through reception of configuredGrantConfig including rrc-ConfiguredUplinkGrant in [Table 10] through higher-layer signaling without reception of a UL grant within DCI. The PUSCH transmission of configured grant Type 2 may be semi-persistently scheduled by a UL grant within DCI after reception of configuredGrantConfig which does not include rrc-ConfiguredUplinkGrant in [Table 10] through higher-layer signaling.

In an embodiment, when the PUSCH transmission is scheduled by the configured grant, parameters applied to the PUSCH transmission may be configured through configuredGrantConfig which is higher-layer signaling of [Table 10] except for specific parameters (e.g., dataScramblingIdentityPUSCH, txConfig, codebookSubset, maxRank, or scaling of UCI-OnPUSCH) provided as pusch-Config of [Table 11] which is higher-layer signaling. For example, when the UE receives transformPrecoder within configuredGrantConfig which is higher-layer signaling of [Table 10], the UE may apply tp-pi2BPSK within pusch-Config of [Table 11] to the PUSCH transmission operated by the configured grant.

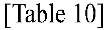

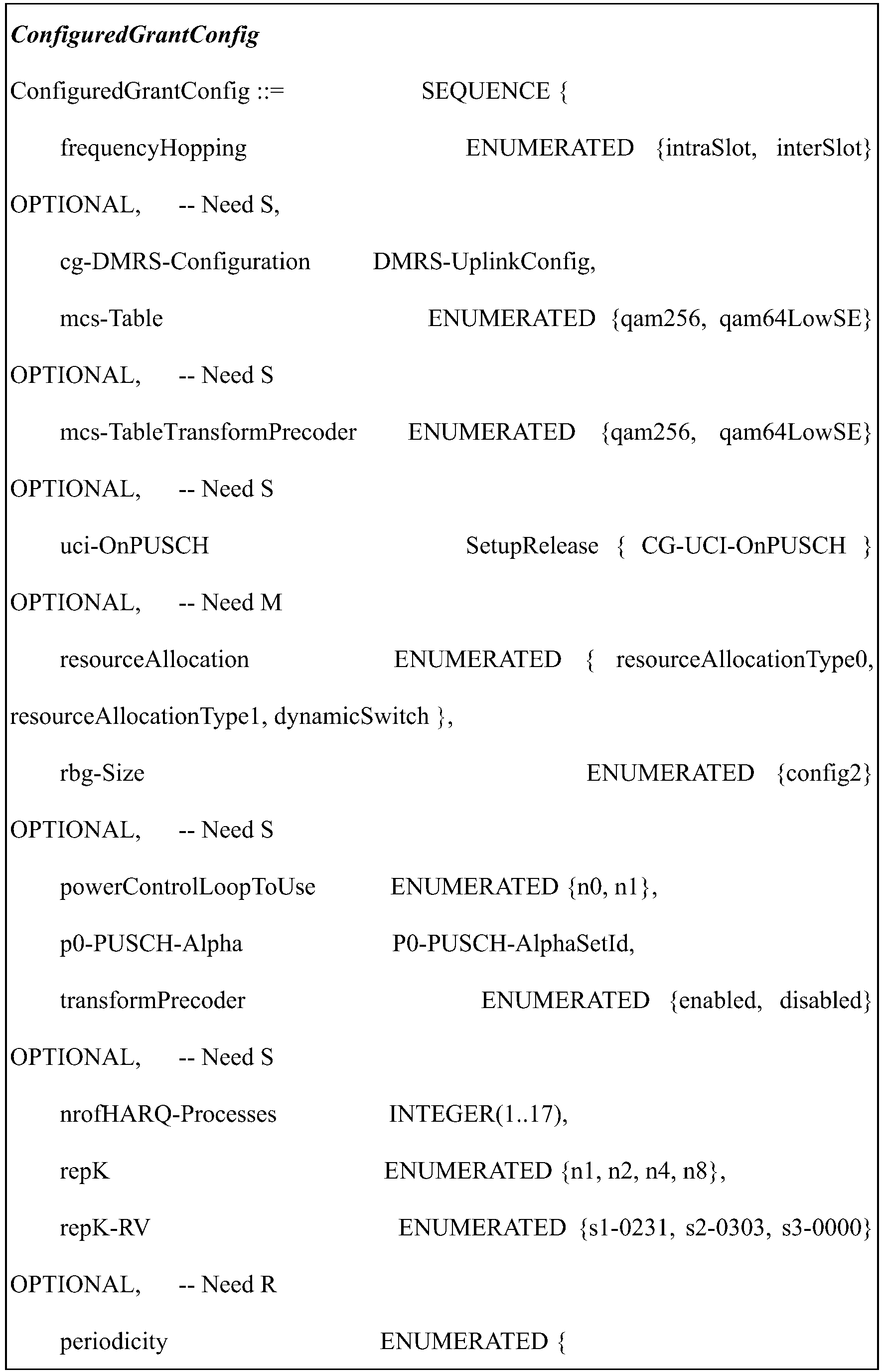

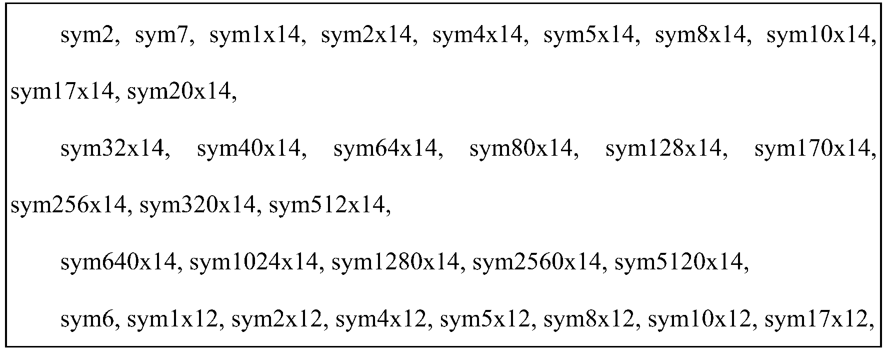

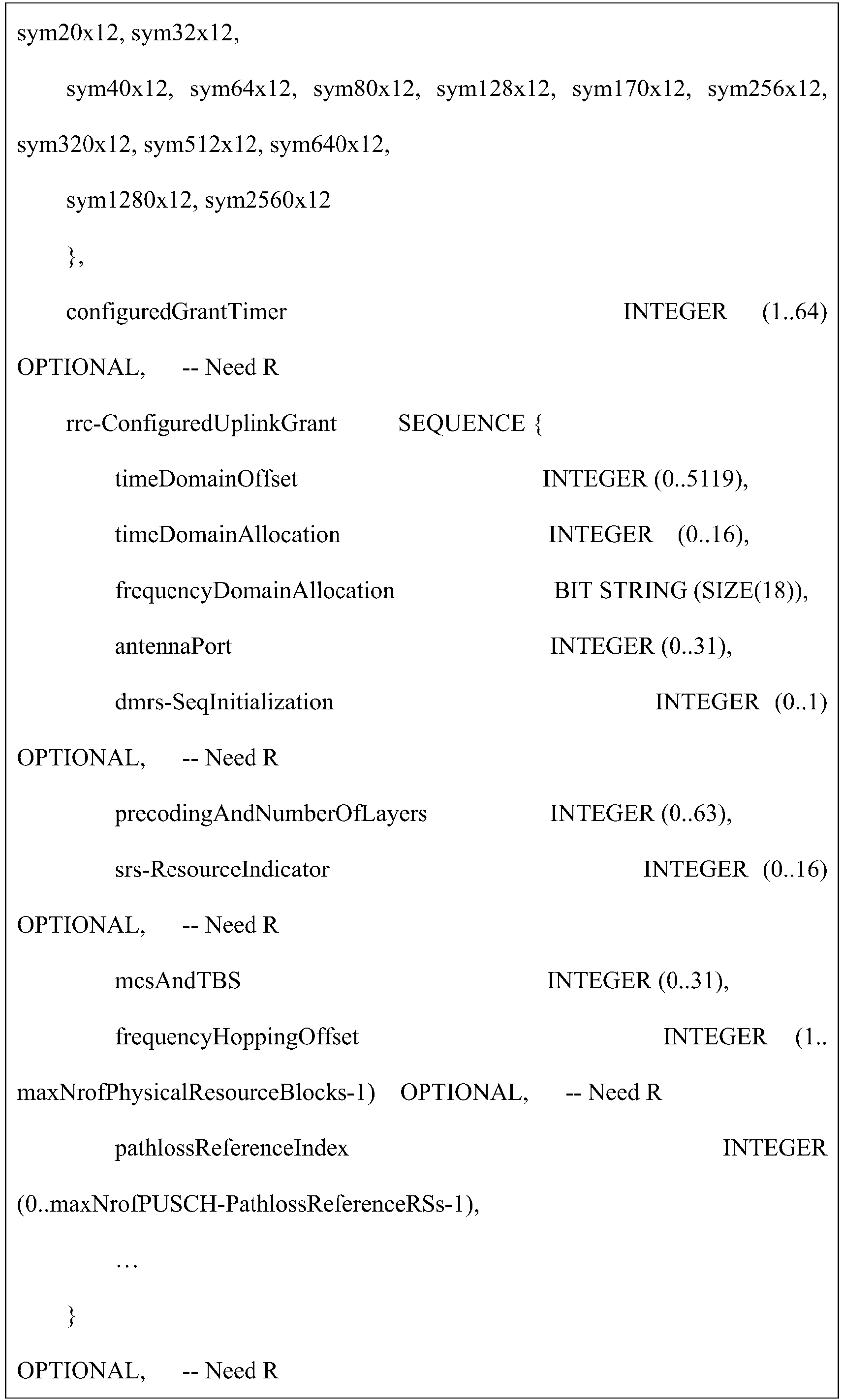

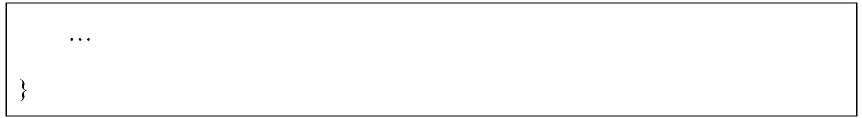

Subsequently, a PUSCH transmission method is described. A DMRS antenna port for PUSCH transmission is the same as an antenna port for SRS transmission. PUSCH transmission may follow each of a codebook-based transmission method and a non-codebook-based transmission method according to whether a value of txConfig within pusch-Config of [Table 7] which is higher signaling is 'codebook' or 'nonCodebook'. As described above, the PUSCH transmission may be dynamically scheduled through DCI format 0_0 or 0_1 or semi-statically configured by the configured grant.

If the UE receives an indication of scheduling for the PUSCH transmission through DCI format 0_0, the UE may perform a beam configuration for the PUSCH transmission by using pucch-spatialRelationInfoID corresponding to UE-specific (dedicated) PUCCH resources having a lowest ID within an activated uplink bandwidth part (BWP) in the serving cell. In an embodiment, the PUSCH transmission may be performed based on a single antenna port. The UE does not expect scheduling for the PUSCH transmission through DCI format 0_0 within a BWP in which the PUCCH resources including pucch-spatialRelationInfo are not configured. If the UE does not receive a configuration of txConfig within pusch-Config of [Table 11], the UE may not expect reception of scheduling through DCI format 0_1.

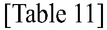

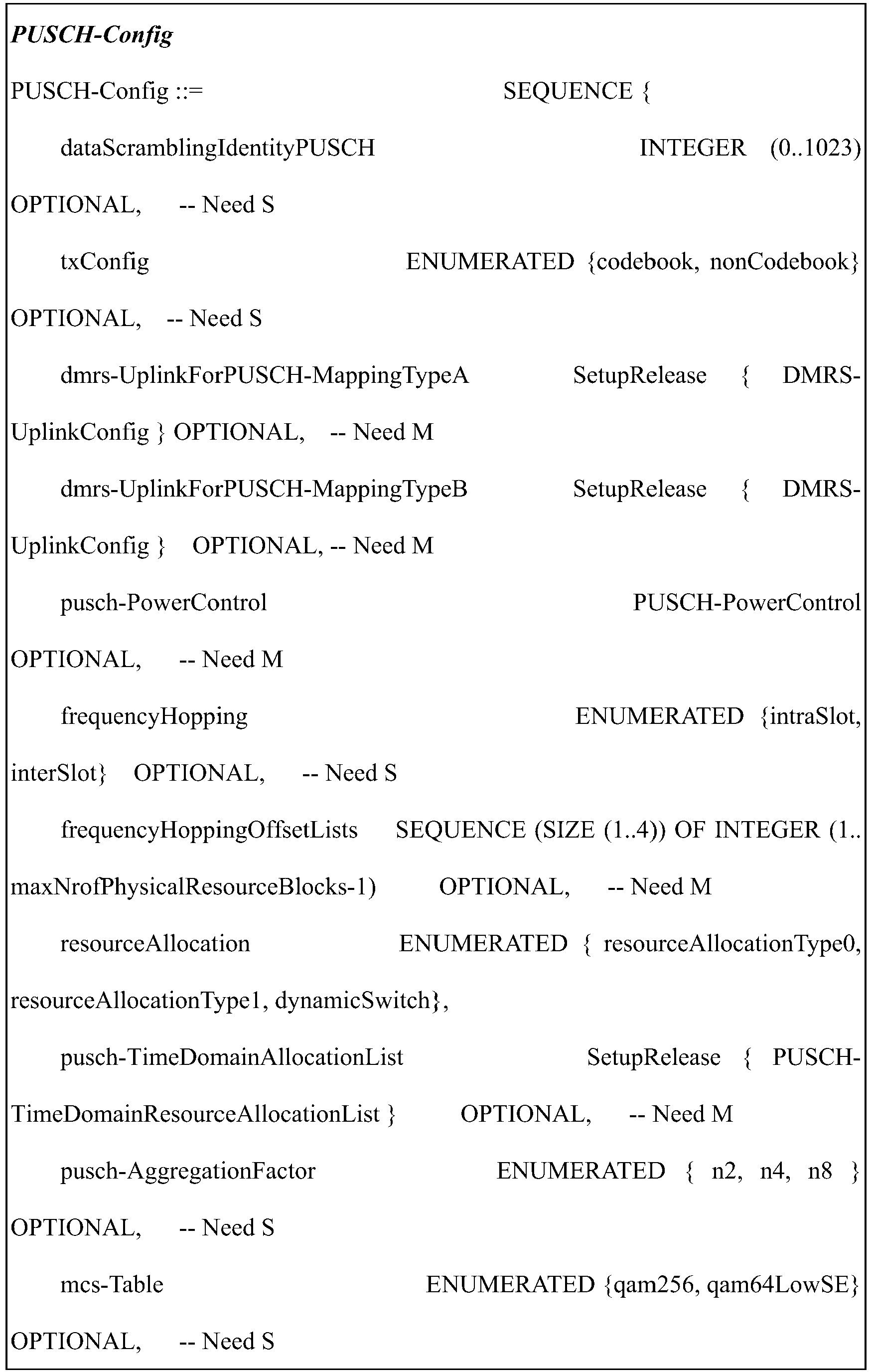

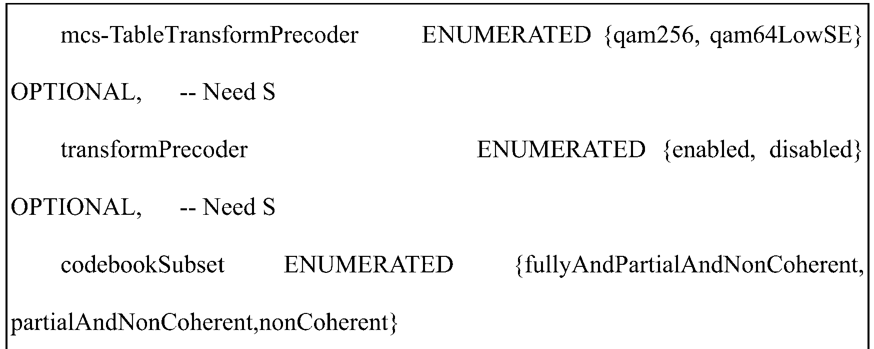

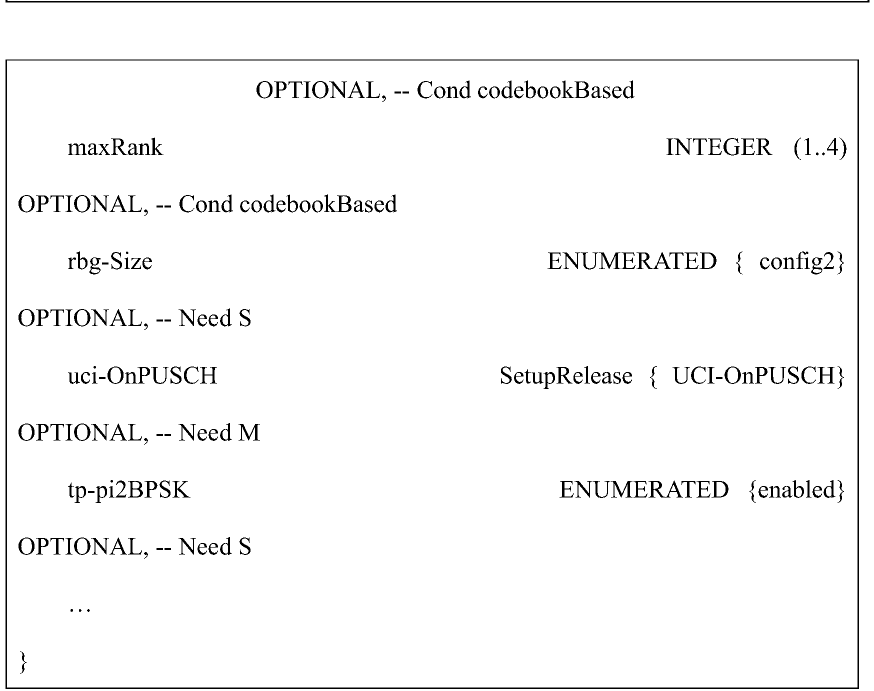

Subsequently, codebook-based PUSCH transmission is described. Codebook-based PUSCH transmission may be dynamically scheduled through DCI format 0_0 or 0_1 or semi-statically operate by the configured grant. When codebook-based PUSCH transmission is dynamically scheduled by codeboock-based PUSCH DCI format 0_1 or is semi-statically configured by the configured grant, the UE may determine a precoder for PUSCH transmission based on an SRS resource indicator (SRI), a transmission precoding matrix indicator (TPMI), and a transmission rank (the number of PUSCH transmission layers).

According to an embodiment of the present disclosure, the SRI may be given through a field SRS resource indicator within DCI or may be configured through srs-ResourceIndicator which is higher signaling. In the codebook-based PUSCH transmission, the UE may receive a configuration of at least one SRS resource, for example, a maximum of 2 SRS resources. When the UE receives the SRI through DCI, the SRS resource indicated by the corresponding SRI is the SRS resource corresponding to the SRI among SRS resources transmitted earlier than the PDCCH including the corresponding SRI. Further, the TPMI and the transmission rank may be given through field precoding information and number of layers within DCI or may be configured through precodingAndNumberOfLayers which is higher signaling. The TPMI may be used to indicate a precoder applied to PUSCH transmission.

The precoder to be used for PUSCH transmission may be selected from an uplink codebook having the number of antenna ports which is the same as a value of nrofSRS-Ports within SRS-Config which is higher signaling. In codebook-based PUSCH transmission, the UE may determine a codebook subset on the basis of the TPMI and a codebookSubset within pusch-Config which is higher signaling. In an embodiment, codebookSubset within pusch-Config which is higher signaling may be configured as one of 'fullyAndPartialAndNonCoherent', 'partialAndNonCoherent', or 'nonCoherent' based on the UE capability which the UE reports to the BS.

If the UE reports 'partialAndNonCoherent' as the UE capability, the UE may not expect a configuration of the value of codebookSubset which is higher signaling as 'fullyAndPartialAndNonCoherent'. Further, if the UE reports 'nonCoherent' as the UE capability, the UE may not expect a configuration of the value of codebookSubset which is higher signaling as 'fullyAndPartialAndNonCoherent' or 'partialAndNonCoherent'. When nrofSRS-Ports within SRS-ResourceSet which is higher signaling indicate 2 SRS antenna ports, the UE may not expect a configuration of the value of codebookSubset which is higher signaling as 'partialAndNonCoherent'.

The UE may receive a configuration of one SRS resource set having a value of usage configured as 'codebook' within SRS-ResourceSet which is higher signaling, and one SRS resource may be indicated through the SRI within the corresponding SRS resource set. If several SRS resources are configured within the SRS resource set having a usage value configured as 'codebook' within SRS-ResourceSet which is higher signaling, the UE may expect a configuration of the same value of nrofSRS-Ports within the SRS-Resource which is higher signaling for all SRS resources.

The UE may transmit one or a plurality of SRS resources included in the SRS resource set having the value of usage configured as 'codebook' to the BS according to higher signaling, and the BS may select one of the SRS resources transmitted by the UE and instruct the UE to perform PUSCH transmission by using transmission beam information of the corresponding SRS resource. In an embodiment, in codebook-based PUSCH transmission, the SRI may be used as information for selecting an index of one SRS resource and may be included in DCI. In addition, the BS may include information indicating the TPMI and the rank to be used by the UE for PUSCH transmission into DCI and transmit the same. The UE may perform PUSCH transmission by applying a precoder indicated by the TPMI and the rank indicated based on the transmission beam of the corresponding SRS resource by using the SRS resource indicated by the SRI.

Subsequently, non-codebook-based PUSCH transmission is described. Non-codebook-based PUSCH transmission may be dynamically scheduled through DCI format 0_0 or 0_1 or may be semi-statically operated by the configured grant. When at least one SRS resource is configured within the SRS resource set having the value of usage configured as 'nonCodebook' within SRS-ResourceSet which is higher signaling, the UE may receive scheduling of non-codebook-based PUSCH transmission through DCI format 0_1.

For the SRS resource set having the value of usage configured as 'nonCodebook' within SRS-ResourceSet which is higher signaling, the UE may receive a configuration of a non-zero power (NZP) CSI-RS resource associated with one SRS resource set. The UE may calculate a precoder for SRS transmission through measurement for the NZP CSI-RS resource configured in association with the SRS resource set. If a difference between the last received symbol of the aperiodic NZP CSI-RS resource associated with the SRS resource set and the first symbol of aperiodic SRS transmission in the UE is smaller than specific symbols (e.g., 42 symbols), the UE may not expect an update of information on the precoder for SRS transmission.

When the value of resourceType within SRS-ResourceSet which is higher signaling is configured as 'aperiodic', the NZP CSI-RS associated with SRS-ResourceSet may be indicated by an SRS request which is a field within DCI format 0_1 or 1_1. In an embodiment, the case where the NZP CSI-RS resource associated with SRS-ResourceSet is the aperiodic NZP CSI resource and the value of the field SRS request within DCI format 0_1 or 1_1 is not '00' may indicate that the NZP CSI-RS associated with SRS-ResourceSet exists. The DCI may not indicate cross carrier or cross BWP scheduling. If the value of the SRS request indicates the existence of the NZP CSI-RS, the NZP CSI-RS may be located in a slot in which the PDCCH including the SRS request field is transmitted. TCI states configured in the scheduled subcarrier may not be configured as QCL-TypeD.

If the periodic or semi-persistent SRS resource set is configured, the NZP CSI-RS associated with the SRS resource set may be indicated through an associatedCSI-RS within SRS-ResourceSet which is higher signaling. For non-codebook-based transmission, the UE may not expect configurations of both spatialRelationInfo which is higher signaling for the SRS resource and associatedCSI-RS within SRS-ResourceSet which is higher signaling.

When the UE receives a configuration of a plurality of SRS resources, the UE may determine a precoder and a transmission rank to be applied to PUSCH transmission on the basis of an SRI indicated by the BS. In an embodiment, the SRI may be indicated through a field SRS resource indicator within DCI or may be configured through srs-ResourceIndicator which is higher signaling. Like the above-described codebook-based PUSCH transmission, when the UE receives the SRI through DCI, the SRS resource indicated by the corresponding SRI may be the SRS resource corresponding to the SRI among SRS resources transmitted earlier than the PDCCH including the corresponding SRI. The UE may use one or a plurality of SRS resources for SRS transmission, and the maximum number of SRS resources which can be simultaneously transmitted in the same symbol within one SRS resource set and the maximum number of SRS resources may be determined by the UE capability which the UE reports to the BS. SRS resources which the UE simultaneously transmits occupy the same RB. The UE may configure one SRS port for each SRS resource. The number of SRS resource sets having the value of usage configured as 'nonCodebook' within SRS-ResourceSet which is higher signaling is only one, and it may be possible to configure SRS resources maximally up to 4 for non-codebook-based PUSCH transmission.

The BS transmits 1 NZP CSI-RS associated with the SRS resource set to the UE, and the UE may calculate a precoder to be used for one or a plurality of SRS resource transmissions within the corresponding SRS resource set based on the measurement result when the corresponding NZP CSI-RS is received. When transmitting one or a plurality of SRS resources within the SRS resource set having usage configured as 'nonCodebook' to the BS, the UE may apply the calculated precoder, and the BS may select one or a plurality of SRS resources from among the received one or plurality of received SRS resources. In non-codebook-based PUSCH transmission, the SRI may indicate an index which may express one SRS resource or a combination of a plurality of SRS resources, and the SRI may be included in the DCI. The number of SRS resources indicated by the SRI transmitted by the BS may be the number of transmission layers of the PUSCH, and the UE may transmit the PUSCH by applying the precoder, which has been applied to SRS resource transmission, to each layer.

The following describes repetition transmission of an uplink data channel (PUSCH and a single TB transmission method through multiple slots in the 5G system. In the 5G system, a repetition transmission method of two types of an uplink data channel (e.g., a PUSCH repetition transmission type A and a PUSCH repetition transmission type B) and TB processing over multi-slot PUSCH (TBoMS) for transmitting a single TB through multiple PUSCHs over multiple slots may be supported. Further, the UE may receive a configuration of one of the PUSCH repetition transmission type A or B through higher-layer signaling. In addition, the UE may receive a configuration of numberOfSlotsTBoMS' through a resource allocation table and transmit the TBoMS.

PUSCH repetition transmission type A
- As described above, the start symbol and the length of the uplink data channel may be determined within one slot through the time domain resource allocation method, and the BS may transmit the number of repetition transmissions to the UE through higher-layer signaling (e.g., RRC signaling) or L1 signaling (e.g., DCI). For determining a TBS, the number N of slots configured as numberOfSlotsTBoMS is 1.
- The UE may repeatedly transmit uplink data channels having the same start symbol and length as the uplink data channel configured above in successive slots based on the number of repetition transmissions received from the BS. In an embodiment, in the slot which the BS configures as the downlink in the UE or when at least one of the symbols within the slot for uplink data channel repetition transmission configured in the UE is configured as the downlink, the UE may omit uplink data channel transmission in the corresponding slot. For example, the UE may not transmit the uplink data channel within the number of uplink data channel repetition transmissions. On the other hand, the UE supporting Rel-17 uplink data repetition transmission may determine that a slot capable of performing uplink data repetition transmission is an available slot and count the number of transmissions for the slot determined as the available slot in the uplink data channel repetition transmission. When uplink data channel repetition transmission determined as the available slot is omitted, the repetition transmission may be performed through a transmittable slot after postpone. By using [Table 12] below, a redundancy version may be applied according to a redundancy version pattern configured for each n^{th} PUSCH transmission occasion.

PUSCH repetitive transmission type B
- As described above, the start symbol and the length of the uplink data channel may be determined within one slot through the time domain resource allocation method, and the BS may transmit the number of repetition transmissions, numberofrepetitions, to the UE through higher signaling (e.g., RRC signaling) or L1 signaling (e.g., DCI). In an embodiment, for determining a TBS, the number N of slots configured as numberOfSlotsTBoMS is 1.
- First, nominal repetition of the uplink data channel may be determined as follows based on the start symbol and the length of the configured uplink data channel. Here, the nominal repetition may be resources of a symbol which the BS configures for PUSCH repetition transmission, and the UE may determine resources which can be used as the uplink in the configured nominal repetition. In this case, a slot in which the n^{th} nominal repetition starts may be given by ${K}_{s} + \left⌊\frac{S + n ⋅ L}{{N}_{symb}^{slot}}\right⌋$, and a symbol in which the nominal repetition starts in the start slot may be given by $mod \left(S+n⋅L,{N}_{symb}^{slot}\right)$. A slot in which the n^{th} nominal repetition ends may be given by ${K}_{s} + \left⌊\frac{S + \left(n+1\right) ⋅ L - 1}{{N}_{symb}^{slot}}\right⌋$, and a symbol in which the nominal repetition ends in the last slot may be given by $mod \left(S+\left(n+1\right)⋅L-1,{N}_{symb}^{slot}\right)$. Here, n=0,..., numberofrepetitions-1, S may denote a start symbol of a configured uplink data channel, and L may denote the symbol length of the configured uplink data channel. *Kₛ* may denote a slot in which PUSCH transmission starts and ${N}_{symb}^{slot}$ may denote the number of symbols per slot.
- The UE may determine an invalid symbol for the PUSCH repetition transmission type B. A symbol configured as the downlink by tdd-UL-DL-ConfigurationCommon or tdd-UL-DL-ConfigurationDedicated may be determined as an invalid symbol for the PUSCH repetition transmission type B. In addition, the invalid symbol may be configured based on a higher-layer parameter (e.g., InvalidSymbolPattern). As an embodiment, the higher-layer parameter (e.g., InvalidSymbolPattern) may configure an invalid symbol by providing a symbol level bitmap over one slot or two slots. In an embodiment, what is indicated by 1 in the bitmap may represent an invalid symbol. In addition, a periodicity and a pattern of the bitmap may be configured through a higher-layer parameter (e.g., periodicityAndPattern). The UE may apply an invalid symbol pattern if the higher-layer parameter (e.g., InvalidSymbolPattern) is configured and an InvalidSymbolPatternIndicator-ForDCIFormat0_1 or InvalidSymbolPatternIndicator-ForDCIFormat0_2 parameter indicates 1, and may not apply the invalid symbol pattern if the same indicates 0. Alternatively, if the higher-layer parameter (e.g., InvalidSymbolPattern) is configured and the InvalidSymbolPatternIndicator-ForDCIFormat0_1 or InvalidSymbolPatternIndicator-ForDCIFormat0_2 parameter is not configured, the UE may apply the invalid symbol pattern.
- After the invalid symbol is determined in each nominal repetition, the UE may consider symbols except for the determined invalid symbol as valid symbols. When one or more valid symbols are included in each nominal repetition, the nominal repetition may include one or more actual repetitions. Here, each actual repetition may mean symbols actually used for PUSCH repetition transmission among the symbols configured as the configured nominal repetition and may include successive sets of valid symbols which can be used for the PUSCH repetition transmission type B within one slot. Except for the case where the symbol length of the configured uplink data channel is 1 (L=1), when actual repetition having one symbol is configured as valid, the UE may omit actual repetition transmission. By using [Table 8] below, a redundancy version may be applied according to a redundancy version pattern configured for each n^{th} actual repetition.

TB processing over multiple slots (TBoMS)
- As described above, the start symbol and the length of the uplink data channel may be determined within one slot through the time domain resource allocation method, and the BS may transmit the number of repetition transmissions to the UE through higher-layer signaling (e.g., RRC signaling) or L1 signaling (e.g., DCI). In an embodiment, a TBS may be determined using a value of N higher than or equal to 1 corresponding to the number of slots configured as numberOfSlotsTBoMS.
- The UE may transmit uplink data channels having the same start symbol and length as the uplink data channel configured above in successive slots based on the number of slots for determining the TBS and the number of repetition transmissions received from the BS. In an embodiment, in the slot which the BS configures as the downlink in the UE or when at least one of the symbols within the slot for uplink data channel repetition transmission configured in the UE is configured as the downlink, the UE may omit uplink data channel transmission in the corresponding slot. For example, the transmission is included in the number of uplink data channel repetition transmissions but may not be performed.

On the other hand, the UE supporting Rel-17 uplink data repetition transmission may determine that a slot capable of performing uplink data repetition transmission is an available slot and count the number of transmissions for the slot determined as the available slot in the uplink data channel repetition transmission. When uplink data channel repetition transmission determined as the available slot is omitted, the repetition transmission may be performed through a transmittable slot after postpone. In an embodiment, by using [Table 12] below, a redundancy version may be applied according to a redundancy version pattern configured for each n^{th} PUSCH transmission occasion.

**[Table 12]**

| ***rv_{id}* indicated by the DCI scheduling the PUSCH** | ***rv_{id}* to be applied to *n*^{th} transmission occasion (repetition Type A) or TB processing over multiple slots) or *n*^{th} actual repetition (repetition Type B)** | | | |
|---|---|---|---|---|
| | ***((n-(n mod N))*/*N)* mod 4 = 0** | ***((n-(n mod N))*/*N)* mod 4 =0** | ***((n-(n mod N))*/*N)* mod 4 = 0** | ***((n-(n mod N))*/*N)* mod 4 =0** |
| 0 | 0 | 2 | 3 | 1 |
| 2 | 2 | 3 | 1 | 0 |
| 3 | 3 | 1 | 0 | 2 |
| 1 | 1 | 0 | 2 | 3 |

The following describes a method of determining an uplink available slot for single or multiple PUSCH transmission in the 5G system.

According to an embodiment of the present disclosure, when the UE receives a configuration of AvailableSlotCounting as enable, the UE may determine an available slot based on tdd-UL-DL-ConfigurationCommon, tdd-UL-DL-ConfigurationDedicated, ssb-PositionsInBurst, and a time domain resource allocation (TDRA) information field value for Type A PUSCH repetition transmission and TBoMS PUSCH transmission. That is, if at least one symbol configured by TDRA for the PUSCH in the slot for PUSCH transmission overlaps at least one symbol for any purpose other than uplink transmission, the slot may be determined as an unavailable slot.

The following describes a method of reducing SSB density through dynamic signaling for BS energy saving in the 5G system.

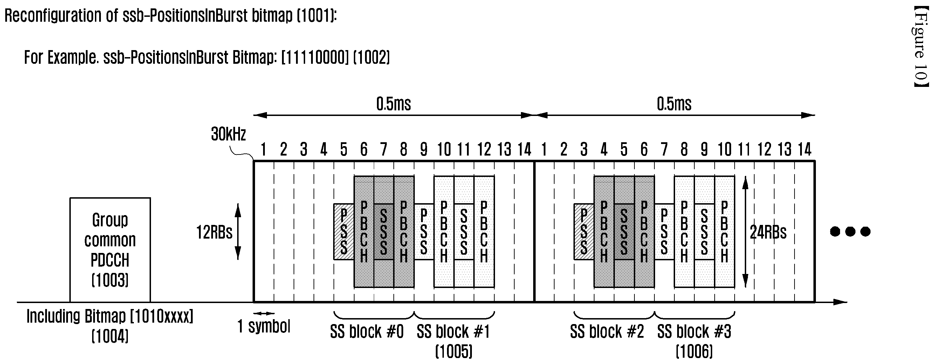

FIG. 10 illustrates a method of reconfiguring SSB transmission through dynamic signaling of the wireless communication system according to an embodiment of the present disclosure.

Referring to FIG. 10, the UE may receive a configuration of ssb-PositionsInBurst = '11110000' 1002 from the BS through higher-layer signaling (SIB1 or ServingCellConfigCommon). A maximum of two synchronization signal blocks may be transmitted within a time of 0.5 ms (or corresponding to 1 slot duration if 1 slot is constituted by 14 OFDM symbols) in the subcarrier spacing of 30 kHz, and accordingly, the UE may receive 4 synchronization signal blocks (SSBs) within a time of 1 ms (or corresponding to 2 slot duration if 1 slot is constituted by 14 OFDM symbols). At this time, in order to reduce density of SSB transmission for energy saving, the BS may reconfigure SSB transmission configuration information by broadcasting a bitmap '1010xxxx' 1004 through a Group/Cell command DCI 1003 having a network energy saving-radio network temporary identifier (nwes-RNTI) (or es-RNTI). At this time, based on the bitmap 1004 configured by Group/Cell common DCI, transmission of SS block #1 1005 and SS block #3 1006 may be cancelled. FIG. 10 illustrates a method 1001 of reconfiguring SSB transmission through bitmap-based group/Cell common DCI.

Further, through the Group/Cell common DCI, the BS may reconfigure ssb-periodicity configured through higher-layer signaling. In addition, by additionally configuring Timer information for indicating a time point at which the Group/Cell common DCI is applied, the SSB may be transmitted through SSB transmission information reconfigured by Group/Cell common DCI during the configured timer. Thereafter, when the timer expires, the BS may operate based on the SSB transmission information configured through the existing higher-layer signaling. This may change the configuration from a normal mode to an energy saving mode through the timer and may reconfigure SSB configuration information due thereto. In another method, the BS may configure a time point and a period of the application of SSB configuration information reconfigured through Group/Cell common DCI in the UE as an Offset and Duration information. At this time, from the moment that Group/Cell common DCI is received, the UE may not monitor the SSB for the Duration from a time point at which the Offset is applied.

The following describes a BWP or BW adaptation method through dynamic signaling for BS energy saving in the 5G system.

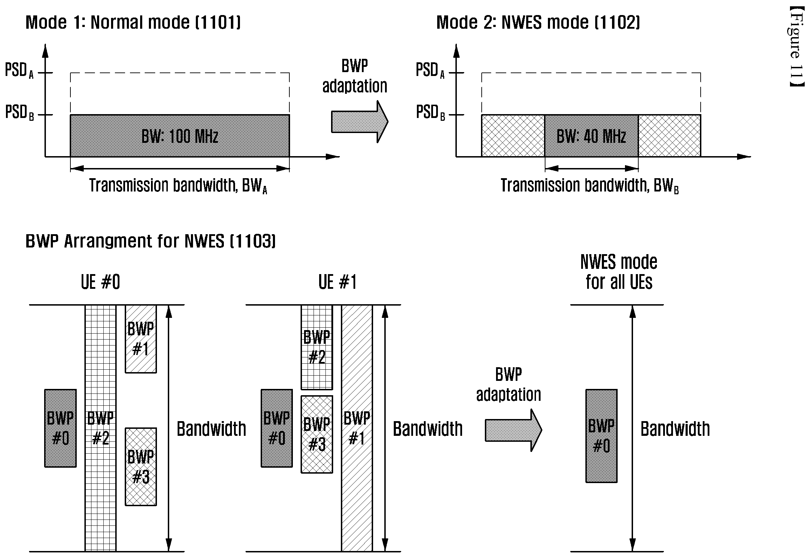

FIG. 11 illustrates a method of reconfiguring a BWP and a BW through dynamic signaling of the wireless communication system according to an embodiment of the present disclosure.

Referring to FIG. 11, the UE may operate in a BWP or BW activated through higher-layer signaling and L1 signaling from the BS in operation 1101. For example, the UE may operate with fixed power PSD_{B} through f Full BW of 100 MHz. At this time, the BS may have the same power PSD_{B} for energy saving and adjust the BW and the BWP to allow the UE to activate a narrower BW of 40 MHz in operation 1102. At this time, the operation of adjusting the BW or BWP for energy saving of the BS may be configured to match the BWP and BW configuration UE-specifically configured through Group common DCI and Cell-specific DCI in operation 1103. For example, UE#0 and UE#1 may have different BWP configurations and locations. At this time, in order to save energy by reducing the BW used by the BS, it is possible to equally configure BWs and BWPs of all UEs as one. At this time, the number of BWPs or BWs in the operation for energy saving may be configured as one or more and may be used to configure the BWP for each UE Group.

In description of the present disclosure, higher-layer signaling may be signaling corresponding to at least one of the following signaling or a combination of one or more thereof.
- Master information block (MIB)
- System information block (SIB) or SIB X (X=1, 2, ...)
- Radio resource control (RRC)
- Medium access control (MAC) control element (CE)

Further, L1 signaling may be signaling corresponding to at least one of or a combination of one or more of signaling methods using the following physical layer channels or signaling.
- Physical downlink control channel (PDCCH)
- Downlink control information (DCI)
- UE-specific DCI
- Group common DCI
- Common DCI
- Scheduling DCI (e.g., DCI used for the purpose of scheduling downlink or uplink data)
- Non-scheduling DCI (e.g., DCI that is not for the purpose of scheduling downlink or uplink data)
- Physical uplink control channel (PUCCH)
- Uplink control information (UCI)

Hereinafter, the present disclosure describes the examples through a plurality of embodiments, but they are not independent and one or more embodiments can be simultaneously or complexly applied.

The following describes a DRX alignment method through dynamic signaling for BS energy saving in the 5G system.

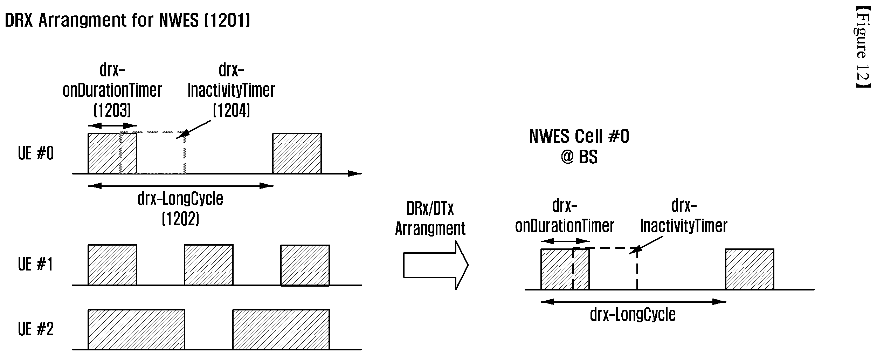

FIG. 12 illustrates a method of reconfiguring DRX through dynamic signaling of the wireless communication system according to an embodiment of the present disclosure.

Referring to FIG. 12, the BS may UE-specifically configure DRX through higher-layer signaling. For example, different drx-LongCycle 1202 or drx-ShortCycle, drx-onDurationTimer 1203 and drx-InactivityTimer 1204 may be configured for each UE. Thereafter, the BS may UE group-specifically or cell-specifically configure a UE-specific DRX configuration for energy saving through L1 signaling in operation 1201. Through this, an effect that is the same as the effect of saving power by the UE through DRX may be obtained for energy saving by the BS.

The following describes an example of describing a discontinuous transmission (DTx) operation for reducing energy consumption of the BS in the 5G system.

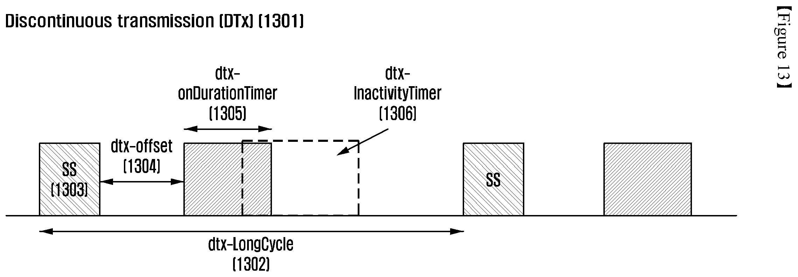

FIG. 13 is a diagram illustrating a DTx method for BS energy saving according to an embodiment of the present disclosure.

Referring to FIG. 13, the BS may configure DTx for energy saving through higher-layer signaling (e.g., new system information block (SIB) for DTx or RRC signaling) and L1 signaling (e.g., DCI). At this time, the BS may configure dtx-onDurationTimer 1305 that transmits a reference signal for PDCCH or RRM measurement for scheduling a DL SCH for the DTx operation, beam management, and measurement for pathloss or the like, dtx-InactivityTimer 1306 for receiving a PDSCH after receiving a PDCCH for scheduling a DL SCH, a synchronization signal (SS) 1303 for synchronization before dtx-onDurationTimer, dtx-offset 1304 for configuring an offset between dtx-onDurationTimer after configuration information SS, and dtx-(Long)Cycle 1302 by which DTx periodically operates based on configuration information. At this time, dtx-cycle may be configured to be plural such as long cycle and short cycle. During the DTx operation, the BS may consider a transmission side as an off (or inactive) state and, accordingly, may not transmit a DL CCH, an SCH, and a DL RS. That is, the BS may transmit the SS only during the DTx operation and the downlink (e.g., PDCCH, PDSCH, RS, and the like) only during dtx-onDurationTimer and dtx-InactivityTimer. At this time, as additional information of the configured SS, SS-gapbetweenBurst (gap between SS bursts in the time domain) or the number of SS bursts may be additionally configured.

The following describes a BS activation method through a gNB wake-up signal (WUS) during an inactivation mode of the BS for reducing energy consumption of the BS in the 5G system.

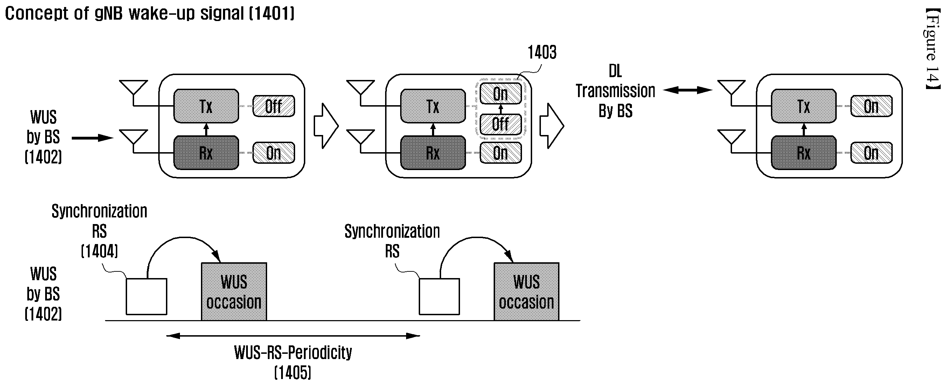

FIG. 14 illustrates an example describing an operation of the BS according to a gNB WUS according to an embodiment of the present disclosure.

Referring to FIG. 14, the BS may maintain a transmitter side in an off (or inactive) state during an inactive state (or sleep mode) of the BS for energy saving. Thereafter, the BS may receive a gNB WUS 1402 for activating the sleep mode of the BS from the UE. Thereafter, when receiving the WUS through the Rx side from the UE, the BS may switch the Tx side to the on (or active) state in operation 1403. Thereafter, the BS may perform downlink transmission to the UE. At this time, the BS may perform synchronization after Tx on and may perform control and data transmission. Further, various uplink signals, for example, a PRACH, a scheduling request (SR) PUCCH, and a PUCCH including Ack may be considered as the gNB WUS. Through the method, the BS may save energy, and simultaneously the UE may improve latency.

At this time, the BS may configure a WUS occasion for receiving the gNB WUS and a Sync RS for synchronization before the UE transmits the gNB WUS. At this time, an SSB, a TRS, a Light SSB (PSS+SSS), consecutive SSBs, or a new RS (continuous PSS + SSS) may be considered as the Sync RS, and a PRACH, a PUCCH with SR, or a sequence based signal may be considered as the WUS. The Sync RS 1404 for activating the inactive mode for energy saving of the BS by the UE and the WUS occasion for receiving the WUS may be repeatedly transmitted with WUS-RS periodicity 1405. In the case of FIG. 14, an embodiment of 1-to-1 mapping between the Sync RS and the WUS occasion may be described as an example, but the present disclosure is not limited thereto. For example, Sync and the WUS occasion may be mapped by N-to-1 mapping, 1-to-N mapping, or N-to-M mapping.

The following describes a method dynamically turning on/off a spatial domain element (that is, antenna, power amplifier (PA), or transceiver units or transmission radio units (TxRUs) for BS energy saving in the 5G system.

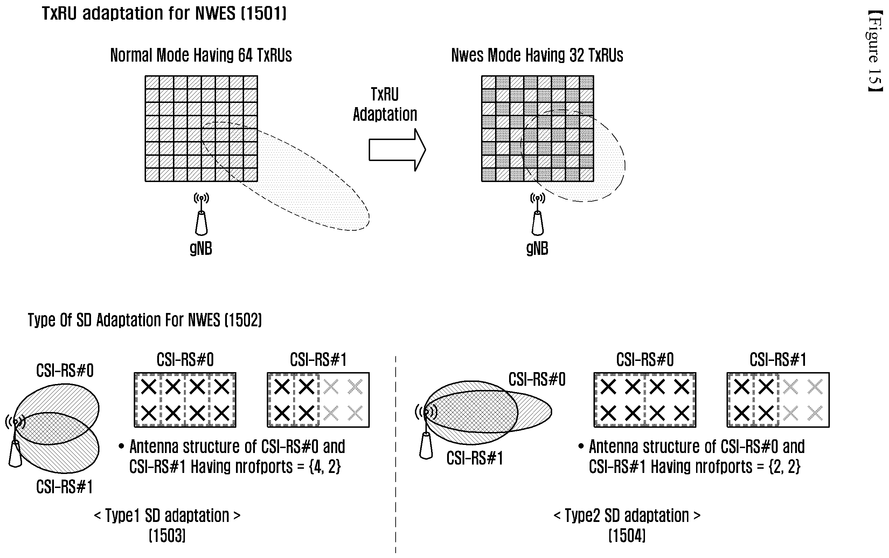

FIG. 15 is a diagram illustrating an antenna adaptation method of the BS for energy saving of the wireless communication system according to an embodiment of the present disclosure.

Referring to FIG. 15, the BS may adjust a Tx antenna port per radio unit (RU) for energy saving (network energy savings (NWES)) in operation 1501. For example, the PA of the BS occupies most of the energy consumption of the BS, and thus the BS may turn off the Tx antenna to save energy. At this time, in order to determine whether the Tx antenna can be turned off, the BS may refer to/use reference signal received power (RSRP), a channel quality indicator (CQI), and a reference signal received quality (RSRQ) of the UE. The BS may adjust the number of activated Tx antennas for each UE group or each UE and perform Tx transmission. At this time, the BS may configure information including one or more pieces of beam information or reference signal information (e.g., one or more of a CSI resource, a CSI resource set, or a CSI report) according to antenna on/off in the UE through higher-layer signaling (e.g., RRC signaling) or DCI signaling. Further, the BS may reconfigure antenna information according to a BWP change by configuring different antenna information for each BWP. In addition, the BS may receive CSI feedback from the UE in order to determine whether spatial domain (SD) adaptation is possible. The BS may determine SD adaptation (based on the CSI feedback). The BS may receive multiple feedback through antenna structure hypotheses of several antenna patterns for SD adaptation from the UE.

More specifically, the BS may apply SD adaptation of a plurality of types (e.g., two types) for energy saving as indicated by reference numeral 1502. For example, the plurality of types may include Type 1 SD adaptation 1503 and Type 2 SD adaptation 1504.

When Type 1 SD adaptation 1503 is applied, the BS may adapt the number of antenna ports while maintaining the number of physical antenna elements per antenna port (that is, logical port). At this time, RF characteristics (e.g., tx power, beam) per port may be the same. Accordingly, the UE may add CSI-RSs of the corresponding same port during CSI measurement (e.g. layer 1-RSRP (L1-RSRP), layer 3-RSRP (L3-RSRP), or the like) to perform measurement.

In another method, when Type 2 SD adaptation 1504 is applied, the BS may have the same number of antenna ports (that is, logical ports) and turn on/off physical antenna elements per port in operation 1504. At this time, the RF characteristic per port may be different. The UE may distinguish CSI-RSs of the same port during CSI measurement and perform each measurement. The BS may save energy through one or more of SD adaptation methods of a plurality of types including the SD adaptation methods of two types.

The following describes a method of configuring an on-demand SSB and SIB1 for applying the on-demand SSB and the SIB for energy saving of the BS in the 5G system. In the present disclosure, the on-demand operation may mean to include the on-demand SSB and the on-demand SIB (e.g., on-demand SIB1). Further, hereinafter, an embodiment is described based on on-demand SIB1, but the present disclosure may also be applied to the on-demand SSB and other SIBs (on-demand SIB). Unless specially mentioned, hereinafter, the SIB1 request may be through the WUS or by the WUS and the corresponding WUS may be understood as a WUS for the SIB1 request.

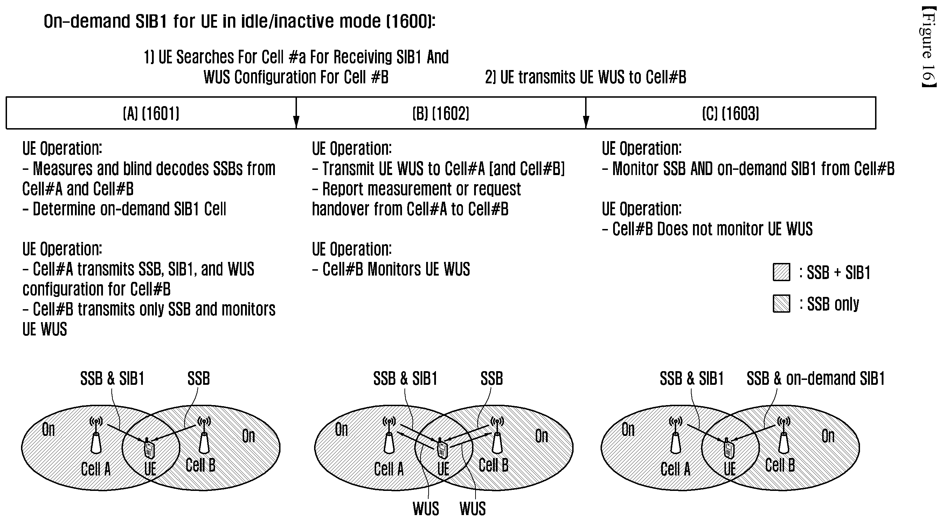

FIG. 16 is a diagram illustrating an example of an on-demand SIB1 operation considering multiple cells of the BS and the UE according to an embodiment of the present disclosure.

The BS may apply/configure/operate a plurality of cells having different functions for the on-demand SIB1 operation considering multiple cells. For example, the BS may apply/configure/operate two cells having different functions for the on-demand SIB1 operation considering multiple cells.

For example, first, the BS may periodically transmit additional information (e.g., wake-up signal (WUS) configuration and SIB information of additional adjacent cells) for the on-demand SIB1 operation of an adjacent cell to an anchor (or reference, adjacent, neighbor) cell (or from the anchor cell) and provide information on a cell which does not transmit SIB1 to the UE during the on-demand SIB1 operation (a cell in which SIB1 is not transmitted or a cell in which transmission of SIB1 is not performed). The cell which does not transmit SIB1 during the on-demand SIB1 operation may be an on-demand SIB1 cell or may include an on-demand SIB1 cell.

Second, the BS may apply/configure/operate the on-demand SIB1 cell. The on-demand SIB1 cell may be a cell that does not transmit SIB1 for energy saving. For example, whether the on-demand SIB1 cell transmits SIB1 may follow a request (that is, on-demand) of the UE, and the on-demand SIB1 cell may not transmit SIB1 when there is no request of the UE and may transmit SIB1 when the UE makes the request. The on-demand SIB1 cell always transmits the SSB (that is, regardless of the request of the UE) and may monitor the WUS according to a configuration. Whether the BS performs WUS monitoring may be configured in the UE via the anchor cell through higher-layer signaling. Further, when the BS does not (directly) receive the WUS in the on-demand SIB1 cell, the SIB1 request from the anchor cell may be received (or transferred to the on-demand SIB1 cell) through backhaul signaling. By using the two cells, the on-demand SIB1 operation may be performed. At this time, the anchor cell may support one or multiple on-demand SIB1 cells and may have larger coverage than the on-demand SIB1 cell.

Referring to FIG. 16, the BS may apply the on-demand SIB1 operation for energy saving. More specifically, referring to an interval (A) 1600, the BS may perform the on-demand SIB1 operation by using multiple cells (anchor cell (cell A) and on-demand SIB1 cell (cell B)). At this time, the BS may transmit an SSB and SIB1 of the corresponding cell through the anchor cell (cell A) and may transmit a WUS configuration for additionally requesting SIB1 of the on-demand SIB1 cell (resource configuration and power control information for WUS transmission) and some of SIB1 information (some of information included in SIB1 of the on-demand SIB1 cell, for example, access-related information, for example, AccessCellInfo or Barring information). Further/Alternatively, the BS may transmit the SSB in the on-demand SIB1 cell (cell B) and monitor the WUS according to a WUS configuration. At this time, the UE may measure the SSB from the cell A and the cell B and determine whether to request SIB1 in the cell B when packet processing is needed.

As a method by which the UE distinguishes the anchor cell or the on-demand SIB1 cell, one of the following methods or a combination of one or more thereof may be applied.

### [Method 1]

The UE may determine the anchor cell or the on-demand SIB1 cell through a PSS, an SSS, and/or a physical cell identity (PCI) of the SSB. More specifically, PCI ${N}_{ID}^{cell}$ is determined as follows.${N}_{ID}^{cell} = 3 {N}_{ID}^{\left(1\right)} + {N}_{ID}^{\left(2\right)} {N}_{ID}^{\left(1\right)} ∈ \left\{0,1,…,335\right\} , {N}_{ID}^{\left(2\right)} ∈ \left\{0, 1, 2\right\} .$

In the above, the ranges of ${N}_{ID}^{\left(1\right)}$ and ${N}_{ID}^{\left(2\right)}$ are examples, and the ranges of available values of ${N}_{ID}^{\left(1\right)}$ and ${N}_{ID}^{\left(2\right)}$ are not limited thereto in the present disclosure. ${N}_{ID}^{cell}$ may be 0,...,1007, but this is only an example and the range of available values of ${N}_{ID}^{cell}$ is not limited thereto.

When cell IDs ${N}_{ID}^{\left(2\right)}$ of the PSS and/or a cell group ID ${N}_{ID}^{\left(1\right)}$ of the SSS is configured as a specific value configured or determined in advance, the UE may determine the corresponding cell as the anchor cell or the on-demand SIB1 cell. For example, at least some of the available values of ${N}_{ID}^{\left(2\right)}$ and/or at least some of the available values of ${N}_{ID}^{\left(1\right)}$ may be configured/determined to indicate the anchor cell. Further/Alternatively, for example, at least some of the available values of ${N}_{ID}^{\left(2\right)}$ and/or at least some of the available values of ${N}_{ID}^{\left(1\right)}$ may be configured/determined to indicate the on-demand SIB1 cell.

Further/Alternatively, when the PCI determined through the PSS and the SSS is configured as a specific value configured or determined in advance, the UE may determine the corresponding cell as the anchor cell or the on-demand SIB1 cell. For example, at least some of the available values of ${N}_{ID}^{cell}$ may be configured/determined to indicate the anchor cell. Further/Alternatively, for example, at least some of the available values of ${N}_{ID}^{cell}$ may be configured/determined to indicate the on-demand SIB1 cell.

### [Method 2]

Through a PBCH of the SSB, the UE may determine the corresponding cell as the anchor cell or the on-demand SIB1 cell through information on an MIB. More specifically, the UE may determine the anchor cell or the on-demand SIB1 cell by using at least some of the information on the MIB shown in [Table 13] below.

**[Table 13]**

| |
|---|
| ``` MIB ::= SEQUENCE { systemFrameNumber BIT STRING (SIZE (6)), subCarrierSpacingCommon ENUMERATED {scs15or60, scs30or120}, ssb-SubcarrierOffset INTEGER (0..15), dmrs-TypeA-Position ENUMERATED {pos2, pos3}, pdcch-ConfigSIB 1 PDCCH-ConfigSIB1, cellBarred ENUMERATED {barred, notBarred}, intraFreqReselection ENUMERATED {allowed, notAllowed}, spare BIT STRING (SIZE (1)) } ``` |

For example, the spare information may be used. The cell corresponding to the corresponding MIB may be determined as the anchor cell when the spare information is configured as '0', and the cell corresponding to the corresponding MIB may be determined as the on-demand SIB1 cell when the spare information is configured as '1'. On the other hand, the cell corresponding to the corresponding MIB may be determined as the anchor cell when the spare information is configured as '1', and the cell corresponding to the corresponding MIB may be determined as the on-demand SIB1 cell when the spare information is configured as '0'.

Further/Alternatively, ssb-SubcarrierOffset and/or pdcch-ConfigSIB1 information of the MIB may be used. In this case, ssb-SubcarrierOffset and/or pdcch-ConfigSIB1 information of the MIB may be interpreted and used differently than before. Further/Alternatively, for example, specific most significant bit (MSB) or least significant bit (LSB) may indicate whether the cell is the on-demand SIB1 cell.

For example, the MSB or LSB of ssb-SubcarrierOffset and/or pdcch-ConfigSIB1 may indicate whether the cell corresponding to the corresponding MIB is the on-demand SIB1 cell. ssb-SubcarrierOffset and/or pdcch-ConfigSIB1 are examples, and an information element (IE) within other MIBs may be used. For example, the MSB or LSB of an IE within a specific MIB may indicate whether the cell corresponding to the corresponding MIB is the on-demand SIB1 cell. For example, when the MSB or LSB has a predefined/configured value, the cell corresponding to the corresponding MIB may be determined as the on-demand SIB1 cell.

### [Method 3]

The UE may determine the on-demand SIB1 cell according to whether SIB1 is transmitted from the corresponding cell for a specific period. That is, according to whether SIB1 is received from a specific cell for a specific period, whether the corresponding specific cell is the on-demand SIB1 cell may be determined/decided.

More specifically, the UE may receive a configuration of a window for monitoring SIB1 in advance. When SIB1 is not received for the corresponding period, the UE may determine at least one cell corresponding to corresponding SIB1 as the on-demand SIB1 cell. For example, when a PDSCH for SIB1 is not received for the corresponding period, the UE may determine at least one cell corresponding to corresponding SIB1 as the on-demand SIB1 cell.

Further/Alternatively, the UE may determine the on-demand SIB1 cell through the number of searchspace monitoring (e.g., the number of monitoring performed by the UE for the corresponding searchspace (within the window)) for receiving a PDCCH for SIB1 scheduling (that is, including scheduling information of SIB1) (e.g., a PDCCH addressed to a system information radio network temporary identifier (SI-RNTI))_{.} For example, when the number of searchspace monitoring is larger than or equal to/larger than a preconfigured/predefined threshold, the corresponding cell may be determined as the on-demand SIB1 cell.

At this time, measurement which the UE measures from the SSB of the corresponding cell should meet a requirement for radio resource management (RRM) measurement. This may be the requirement for access to the corresponding cell. That is, when SIB1 is not received from a specific cell even though the specific cell meets the corresponding requirement, the specific cell may be determined as the on-demand SIB1 cell. For example, when SIB1 is not received from a specific cell even though reference signal received power (RSRP) and/or reference signal received quality (RSRQ) measured from the SSB of the specific cell meet the RRM requirement, the specific cell may be determined as the on-demand SIB1 cell.

Through at least one of the above methods, the UE may determine whether the corresponding cell is the on-demand SIB1 cell or the anchor cell.

Thereafter, in an interval (B) 1602, through the anchor cell, the UE may receive configuration information for WUS transmission and information for access to the corresponding on-demand SIB1 cell through higher-layer signaling (e.g., RRC, SIB1, or SIB for network energy saving (NES)) or L1 signaling (message 4 (MSG4) or PUSCH/PUCCH) and request SIB1 to access the on-demand SIB1 cell.

At this time, when a difference in the RSRP or RSRQ measured by the SSB through each of the anchor cell and the on-demand SIB1 cell in order to determine access to the on-demand SIB1 cell, not access to the anchor cell, is larger than a specific threshold, the UE may determine to access the on-demand SIB1 cell rather than the anchor cell. For example, when the difference between the RSRP or RSRQ measured from the SSB of the on-demand SIB1 cell and the RSRP or RSRQ measured from the SSB of the anchor cell is larger than or equal to/larger than a predefined/configured threshold, the UE may determine to access the on-demand SIB1 cell. Further, by reporting the measured result to the anchor cell or requesting handover, the UE may indicate a request for the on-demand SIB1 cell through the anchor cell. When the anchor cell receives the report on the measured result from the UE and/or receives the request for handover from the anchor cell to the on-demand SIB1 cell, the anchor cell may indicate an on-demand SIB1 request to the on-demand SIB1 cell. The anchor cell may indicate the measured result from the UE and/or whether there is the on-demand SIB1 request to the on-demand SIB1 cell through backhaul signaling.

Further/Alternatively, when it is identified that the access to the anchor cell is not possible according to cellBarred information of the MIB of the anchor cell, the UE may determine to access the on-demand SIB1 cell.

Thereafter, in the interval (B) 1602, the UE may transmit the WUS to the anchor cell or the on-demand SIB1 cell according to WUS configuration information. For example, the WUS may be transmitted through a PUCCH, a PRACH, or a PUSCH.

The UE may transmit the WUS once or may repeatedly transmit the same in an interval (C) 1603 thereafter. After WUS transmission, the UE may monitor a PDCCH for SIB1 scheduling from the on-demand SIB1 cell. In the previous interval (B) 1602, when the UE identifies the on-demand SIB1 cell, the UE may not monitor a PDCCH related to SIB1 (of the on-demand SIB1 cell) before WUS transmission. At this time, the BS may transmit SIB1 without monitoring the WUS after receiving the WUS. That is, after receiving the WUS, the BS may stop monitoring the WUS and transmit SIB1 of the on-demand SIB1 cell.

Through at least some of the methods, the BS and the UE may perform the on-demand SIB1 operation considering multiple cells.

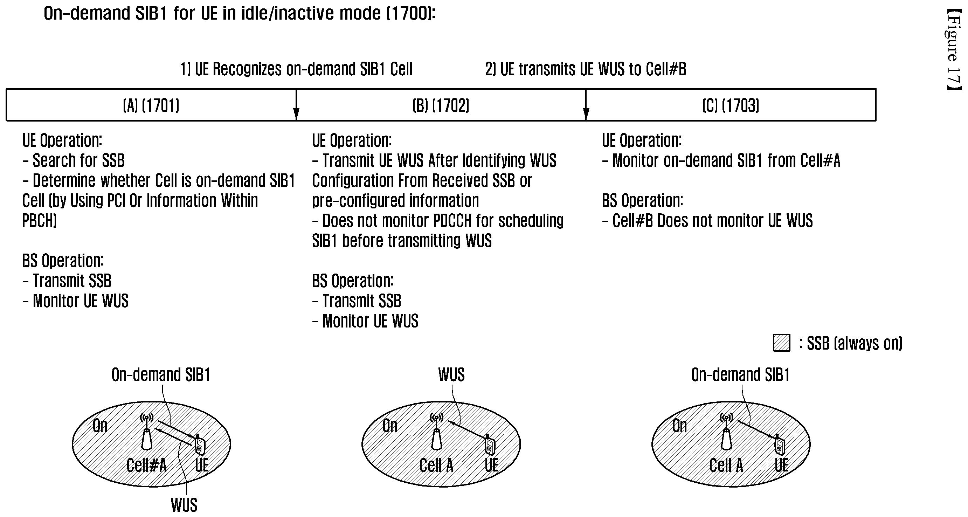

FIG. 17 is a diagram illustrating an example of an on-demand SIB1 operation considering single cells of the BS and the UE according to an embodiment of the present disclosure.

Referring to FIG. 17, the BS may perform the on-demand SIB1 operation considering a single cell. At this time, the corresponding cell may periodically transmit the SSB and may not transmit a PDCCH for SIB1 and a PDSCH for SIB1 in operation (A) 1701. For example, whether to transmit SIB1 of the corresponding cell may follow a request from the UE, and the corresponding cell may not transmit SIB1 when there is no request from the UE and may transmit SIB1 when the UE makes the request. Further, the corresponding cell may monitor a WUS for receiving an on-demand request of SIB1. At this time, the UE may receive the SSB through the corresponding cell and, thereafter, may determine whether to perform the on-demand SIB1 operation through one of the following methods or a combination of one or more thereof. That is, whether the corresponding cell is the on-demand SIB1 cell may be determined by one of the following methods or a combination of one or more thereof.

### [Method 1]

The UE may determine the on-demand SIB1 cell through a PSS, an SSS, or a PCI of the SSB. More specifically, PCI ${N}_{ID}^{cell}$ is determined as follows.${N}_{ID}^{cell} = 3 {N}_{ID}^{\left(1\right)} + {N}_{ID}^{\left(2\right)} {N}_{ID}^{\left(1\right)} ∈ \left\{0,1,…,335\right\} , {N}_{ID}^{\left(2\right)} ∈ \left\{0, 1, 2\right\} .$

In the above, the ranges of ${N}_{ID}^{\left(1\right)}$ and ${N}_{ID}^{\left(2\right)}$ are examples, and the ranges of available values of ${N}_{ID}^{\left(1\right)}$ and ${N}_{ID}^{\left(2\right)}$ are not limited thereto in the present disclosure. ${N}_{ID}^{cell}$ may be 0,...,1007, but this is only an example and the range of available values of ${N}_{ID}^{cell}$ is not limited thereto.

When cell IDs ${N}_{ID}^{\left(2\right)}$ of the PSS and/or a cell group ID ${N}_{ID}^{\left(1\right)}$ of the SSS is configured as a specific value configured or determined in advance, the UE may determine the corresponding cell as the on-demand SIB1 cell. For example, at least some of the available values of ${N}_{ID}^{\left(2\right)}$ and/or at least some of the available values of ${N}_{ID}^{\left(1\right)}$ may be configured/determined to indicate the on-demand SIB1 cell.

Further/Alternatively, when the PCI determined through the PSS and the SSS is configured as a specific value configured or determined in advance, the UE may determine the corresponding cell as the on-demand SIB1 cell. For example, at least some of the available values of ${N}_{ID}^{cell}$ may be configured/determined to indicate the on-demand SIB1 cell.

### [Method 2]

Through a PBCH of the SSB, the UE may determine the corresponding cell as the on-demand SIB1 cell through information on an MIB. More specifically, the UE may determine the on-demand SIB1 cell by using at least some of the information on the MIB shown in [Table 14] below.

**[Table 14]**

| |
|---|
| ``` MIB ::= SEQUENCE { systemFrameNumber BIT STRING (SIZE (6)), subCarrierSpacingCommon ENUMERATED {scs15or60, scs30or120}, ssb-SubcarrierOffset INTEGER (0..15), ``` ``` dmrs-TypeA-Position ENUMERATED {pos2, pos3}, pdcch-ConfigSIB 1 PDCCH-ConfigSIB1, cellBarred ENUMERATED {barred, notBarred}, intraFreqReselection ENUMERATED {allowed, notAllowed}, spare BIT STRING (SIZE (1)) } ``` |

For example, the spare information may be used. The on-demand SIB1 operation for the cell corresponding to the corresponding MIB may be determined as deactivation when the spare information is configured as '0', and the cell corresponding to the corresponding MIB may be determined as the on-demand SIB1 cell when the same is configured as '1'. On the other hand, the on-demand SIB1 operation for the cell corresponding to the corresponding MIB may be determined as deactivation when the spare information is configured as '1', and the cell corresponding to the corresponding MIB may be determined as the on-demand SIB1 cell when the spare information is configured as '0'.

Further/Alternatively, ssb-SubcarrierOffset and/or pdcch-ConfigSIB1 information of the MIB may be used. In this case, ssb-SubcarrierOffset and/or pdcch-ConfigSIB1 information of the MIB may be interpreted and used differently than before. For example, specific MSB or LSB may indicate whether the cell is the on-demand SIB1 cell.

For example, the MSB or LSB of ssb-SubcarrierOffset and/or pdcch-ConfigSIB 1 may indicate that the cell corresponding to the corresponding MIB is the on-demand SIB1 cell. ssb-SubcarrierOffset and/or pdcch-ConfigSIB 1 are examples, and IE within other MIBs may be used. For example, the MSB or LSB of an IE within a specific MIB may indicate that the cell corresponding to the corresponding MIB is the on-demand SIB1 cell. For example, when the MSB or LSB has a predefined/configured value, the cell corresponding to the corresponding MIB may be determined as the on-demand SIB1 cell.

### [Method 3]

The UE may determine the on-demand SIB1 cell according to whether SIB1 is transmitted from the corresponding cell for a specific period. That is, according to whether SIB1 is received from a specific cell for a specific period, whether the corresponding specific cell is the on-demand SIB1 cell may be determined/decided.

More specifically, the UE may receive a configuration of a window for monitoring SIB1 in advance. When SIB1 is not received for the corresponding period, the UE may determine at least one cell corresponding to corresponding SIB1 as the on-demand SIB1 cell. For example, when a PDSCH for SIB1 is not received for the corresponding period, the UE may determine at least one cell corresponding to corresponding SIB1 as the on-demand SIB1 cell.

Further/Alternatively, the UE may determine the on-demand SIB1 cell through the number of searchspace monitoring (e.g., the number of monitoring performed by the UE for the corresponding searchspace (within the window)) for receiving a PDCCH for SIB1 scheduling (that is, including scheduling information of SIB1) (e.g., a PDCCH addressed to a system information radio network temporary identifier (SI-RNTI)). For example, when the number of searchspace monitoring is larger than or equal to/larger than a preconfigured/predefined threshold, the corresponding cell may be determined as the on-demand SIB1 cell.

At this time, measurement which the UE measures from the SSB of the corresponding cell should meet a requirement for RRM measurement. This may be the requirement for access to the corresponding cell. That is, when SIB1 is not received from a specific cell even though the specific cell meets the corresponding requirement, the specific cell may be determined as the on-demand SIB1 cell. For example, when SIB1 is not received from a specific cell even though RSRP and/or RSRQ measured from the SSB of the specific cell meet the RRM requirement, the specific cell may be determined as the on-demand SIB1 cell.

Through at least one of the methods, the UE may determine whether the corresponding cell is activating or deactivating on-demand SIB1.

Thereafter, in an interval (B) 1702, after the UE determines whether on-demand SIB1 of the corresponding cell is activated, when the same is activated, the UE may transmit a WUS based on WUS resource information preconfigured for WUS transmission and request SIB1 when access is needed. At this time, the UE may determine the resource of the corresponding WUS transmission by applying a preconfigured/prefixed time/frequency offset based on the SSB. The preconfigured/pre-fixed offset may be differently preconfigured for each PCI. In another method, the UE may newly interpret MIB information of the SSB for the on-demand SIB1 cell and determine a resource location for WUS transmission. For example, a specific frequency domain resource allocation (FDRA) and time domain resource allocation (TDRA) list table is preconfigured for WUS resource allocation, and indicated and determined through pdcch-ConfigSIB1 of the MIB. For example, the FDRA and/or TDRA within the preconfigured FDRA list table and/or TDRA list table may be indicated through pdcch-ConfigSIB1 of the MIB. For example, MSB 4bits of pdcch-ConfigSIB1 may indicate FDRA information, and LSB 4bits may indicate TDRA information. On the other hand, MSB 4bits of pdcch-ConfigSIB1 may indicate TDRA information, and LSB 4bits may indicate FDRA information.

In an interval (C) 1703 after WUS transmission based on the configuration information of the UE, the UE may monitor a PDCCH for scheduling SIB1 from the corresponding cell and initially access the corresponding cell after receiving SIB1. After receiving the WUS, the BS may not perform WUS monitoring in the corresponding cell. That is, after receiving the WUS, the BS may stop monitoring the WUS in the corresponding cell.

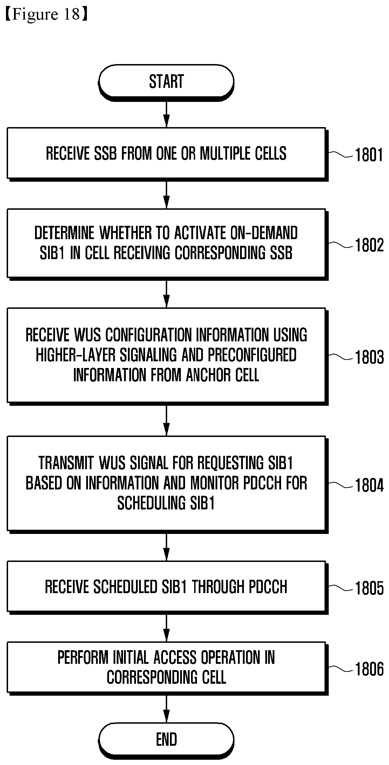

FIG. 18 is a flowchart of a UE operation that applies an energy saving method in the wireless communication system according to an embodiment of the present disclosure. Various modifications can be made to the method illustrated in the flowchart of FIG. 18. For example, although illustrated as a series of steps, various steps in the drawings may overlap, may be generated in parallel, may be generated in different orders, or may be generated several times. In another example, the steps may be omitted or replaced with other steps.

Based on FIG. 18, the operation of the UE during an on-demand operation of the BS in an SCell for energy saving is described.

Referring to FIG. 18, in step 1801, the UE may receive an SSB from the BS through one or multiple cells.

In step 1802, the UE may determine whether on-demand SIB1 is activated in the cell in which the corresponding SSB is received.

In step 1803, the UE may receive WUS configuration information using higher-layer signaling and preconfigured information from an anchor cell.

In step 1804, the UE may transmit a WUS signal for requesting SIB1 based on the information and monitor a PDCCH for SIB1 scheduling.

In step 1805, the UE may receive scheduled SIB1 through the PDCCH in the corresponding cell.

In step 1806, the UE may perform an initial access operation in the corresponding cell.

The detailed content of the UE operation according to the above-described embodiment of the present disclosure may be referred to the description of the above-described embodiment of the present disclosure.

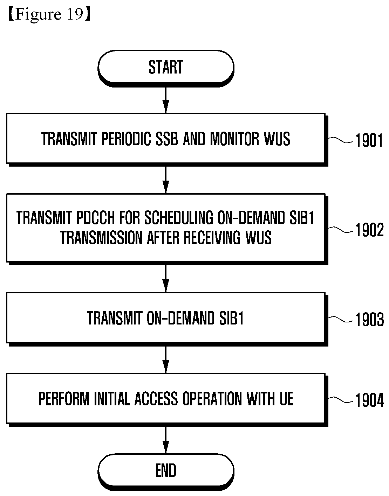

FIG. 19 is a flowchart of a BS operation that applies an energy saving method in the wireless communication system according to an embodiment of the present disclosure. Various modifications can be made to the method illustrated in the flowchart of FIG. 19. For example, although illustrated as a series of steps, various steps in the drawings may overlap, may be generated in parallel, may be generated in different orders, or may be generated several times. In another example, the steps may be omitted or replaced with other steps.

Referring to FIG. 19, in step 1901, the BS may perform periodic SSB transmission to the UE and perform monitoring of a WUS.

In step 1902, after receiving the WUS from an anchor cell or the UE, the BS may transmit a PDCCH for scheduling transmission of on-demand SIB1.

In step 1903, the BS may transmit on-demand SIB1 to the UE.

In step 1904, thereafter, the BS may perform an initial access operation with the UE.

The detailed content of the BS operation according to the above-described embodiment of the present disclosure may be referred to the description of the above-described embodiment of the present disclosure.

The above-described flowchart illustrates an exemplified method which can be implemented according to the principle of the present disclosure, and various modifications can be made for the method illustrated in the flowchart in this specification. For example, although illustrated as a series of steps, various steps in the drawings may overlap, may be generated in parallel, may be generated in different orders, or may be generated several times. In another example, the steps may be omitted or replaced with other steps.

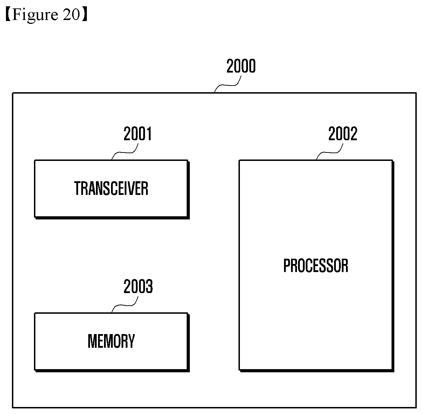

FIG. 20 is a block diagram of a terminal according to an embodiment of the present disclosure.

Referring to FIG. 20, a terminal 2000 may include a transceiver 2001, a controller (e.g., processor) 2002, and a storage unit (e.g., memory) 2003. According to at least one or a combination of the methods corresponding to the above-described embodiments, the transceiver 2001, the controller 2002, and the storage unit 2003 of the terminal 2000 may operate. However, components of the terminal 2000 are not limited to the illustrated examples. According to another embodiment, the terminal 2000 may include more or fewer elements than the above-described elements. Further, the transceiver 2001, the controller 2002, and the storage unit 2003 may be implemented in a single-chip form in specific case.

The transceiver 2001 may be constituted by a transmitter and a receiver according to an embodiment. The transceiver 2001 may transmit and receive signals to and from the BS. The signal may include control information and data. The transceiver 2001 may include an RF transmitter for up-converting and amplifying a frequency of a transmitted signal and an RF receiver for low-noise amplifying a received signal and down-converting a frequency. The transceiver 2001 may receive a signal through a radio channel, output the same to the controller 2002, and transmit the signal output from the controller 2002 through the radio channel.

The controller 2002 may control a series of procedures based on which the terminal 2000 can operate according to the above-described embodiments of the present disclosure. For example, the controller 2002 may perform or control operations of the terminal for performing at least one or a combination of the methods according to embodiments of the present disclosure. The controller 2002 may include at least one processor. For example, the controller 2002 may include a communication processor (CP) for performing the control for communication and an application processor (AP) for controlling a higher layer (e.g., application).

The storage unit 2003 may store control information (e.g., information related to channel estimation using DMRSs transmitted by a PUSCH included in a signal acquired by the terminal 2000) or data and may have an area for storing data required for the control by the controller 2002 and data generated during the control by the controller 2002.

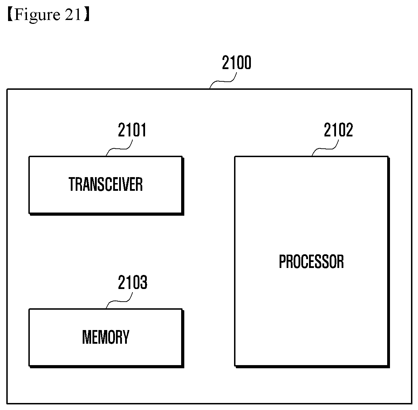

FIG. 21 is a block diagram of a BS according to an embodiment.

Referring to FIG. 21, a BS 2100 may include a transceiver 2101, a controller (e.g., processor) 2102, and a storage unit (e.g., memory) 2103. According to at least one or a combination of the methods corresponding to the above-described embodiments, the transceiver 2101, the controller 2102, and the storage unit 2103 of the BS 2100 may operate. However, components of the BS 2100 are not limited to the illustrated examples. According to another embodiment, the BS 2100 may include more or fewer components than the above-described components. Further, the transceiver 2101, the controller 2102, and the storage unit 2103 may be implemented in a single-chip form in specific case.

The transceiver 2101 may be constituted by a transmitter and a receiver according to an embodiment. The transceiver 2101 may transmit and receive signals to and from the terminal. The signal may include control information and data. The transceiver 2101 may include an RF transmitter for up-converting and amplifying a frequency of a transmitted signal and an RF receiver for low-noise amplifying a received signal and down-converting a frequency. The transceiver 2101 may receive a signal through a radio channel, output the same to the controller 2102, and transmit the signal output from the controller 2102 through the radio channel.

The controller 2102 may control a series of procedures so that the BS 2100 can operate according to the above-described embodiments of the present disclosure. For example, the controller 2102 may perform or control the operation of the BS for performing at least one or a combination of the methods according to embodiments of the present disclosure. The controller 2102 may include at least one processor. For example, the controller 2102 may include a communication processor (CP) for performing the control for communication and an application processor (AP) for controlling a higher layer (e.g., application).

The storage unit 2103 may store control information (e.g., information related to channel estimation generated using DMRSs transmitted by a PUSCH determined by the BS 2100), data, control information received from the terminal, or data and may have an area for storing data required for the control by the controller 2102 and data generated during the control by the controller 2102.

The drawings illustrate different examples of a user apparatus/base station, but various modifications of the drawings may be made. For example, the user apparatus/base station may include any number of respective components in any suitable arrangement. In general, the drawings do not limit the scope of the present disclosure to any specific configuration. Further, the drawings illustrate an operation environment in which various user apparatus/base station features disclosed in the patent document can be used, but such features may be used in any other suitable systems.

The present disclosure has been described through exemplified embodiments, but various modifications and changes may be presented to those skilled in the art. The present disclosure is intended to include such modifications and changes that fall within the scope of the appended claims. The description in this application should not be construed as implying that any particular element, step, or function is an essential element to be included in the scope of the claims. The scope of the patented subject matter is defined by the claims.

## Claims

1. A method performed by a terminal in a communication system, the method comprising:
receiving, from a first cell, a synchronization signal/physical broadcast channel (SS/PBCH) block of the first cell;
receiving, from the first cell, an uplink (UL) wake-up signal (WUS) configuration for a second cell;
transmitting a UL WUS to the second cell based on the UL WUS configuration for the second cell; and
receiving, from the second cell, on-demand system information block 1 (SIB1) of the second cell after transmitting the UL WUS.

2. The method of claim 1, further comprising:
identifying a master information block (MIB) of the first cell, based on the SS/PBCH block of the first cell;
identifying whether an operation related to on-demand SIB1 is activated for the first cell based on specific information included in the MIB of the first cell; and
in case of identifying that the operation related to on-demand SIB1 is deactivated for the first cell, receiving SIB1 of the first cell from the first cell,
wherein the specific information is ssb-SubcarrierOffset, pdcch-ConfigSIB1, or spare.

3. The method of claim 2, wherein the receiving of the UL WUS configuration for the second cell is performed in case of identifying that the operation related to on-demand SIB1 is deactivated for the first cell, and
wherein the UL WUS corresponds to a physical random access channel (PRACH).

4. The method of claim 1, further comprising identifying whether SIB1 of the second cell is provided from the second cell during a specific time interval after receiving the UL WUS configuration for the second cell,
wherein transmission of the UL WUS is performed in case of identifying that SIB1 of the second cell is not provided from the second cell during the specific time interval.

5. The method of claim 4, wherein the specific time interval is a time interval corresponding to a preconfigured monitoring window for SIB1 of the second cell, and
wherein a measurement value measured based on the SS/PBCH block of the second cell meets a radio resource management (RRM) requirement.

6. A terminal in a communication system, the terminal comprising:
a transceiver; and
a processor connected to the transceiver,
wherein the processor is configured to:
receive, from a first cell, a synchronization signal/physical broadcast channel (SS/PBCH) block of the first cell;
receive, from the first cell, an uplink (UL) wake-up signal (WUS) configuration for a second cell;
transmit a UL WUS to the second cell based on the UL WUS configuration for the second cell; and
receive, from the second cell, on-demand system information block 1 (SIB1) of the second cell after transmitting the UL WUS.

7. The terminal of claim 6, wherein the processor is configured to:
identify a master information block (MIB) of the first cell, based on the SS/PBCH block of the first cell;
identify whether an operation related to on-demand SIB1 is activated for the first cell based on specific information included in the MIB of the first cell; and
in case of identifying that the operation related to on-demand SIB1 is deactivated for the first cell, receive SIB1 of the first cell from the first cell,
wherein the specific information is ssb-SubcarrierOffset, pdcch-ConfigSIB1, or spare.

8. The terminal of claim 7, wherein the receiving of the UL WUS configuration for the second cell is performed in case of identifying that the operation related to on-demand SIB1 is deactivated for the first cell, and
wherein the UL WUS corresponds to a physical random access channel (PRACH).

9. The terminal of claim 6, wherein the processor is configured to identify whether SIB1 of the second cell is provided from the second cell during a specific time interval after receiving the UL WUS configuration for the second cell,
wherein transmission of the UL WUS is performed in case of identifying that SIB1 of the second cell is not provided from the second cell during the specific time interval.

10. The terminal of claim 9, wherein the specific time interval is a time interval corresponding to a preconfigured monitoring window for SIB1 of the second cell, and
wherein a measurement value measured based on the SS/PBCH block of the second cell meets a radio resource management (RRM) requirement.

11. A method performed by a base station in a communication system, the method comprising:
transmitting synchronization signal/physical broadcast channel (SS/PBCH) block of a first cell through the first cell;
transmitting an uplink (UL) wake-up signal (WUS) configuration for a second cell through the first cell;
receiving a UL WUS related to the UL WUS configuration for the second cell through the second cell; and
receiving on-demand system information block 1 (SIB1) of the second cell through the second cell after receiving the UL WUS.

12. The method of claim 11, further comprising
identifying whether an operation related to on-demand SIB1 is activated in the first cell; and
acquiring specific information based on a result of identifying whether the operation related to on-demand SIB1 is activated in the first cell,
wherein the specific information is ssb-SubcarrierOffset, pdcch-ConfigSIB1, or spare included in a master information block (MIB) of the first cell included in the SS/PBCH block of the first cell.

13. The method of claim 12, wherein the transmitting of the UL WUS configuration for the second cell is performed in case of the operation related to on-demand SIB1 is deactivated in the first cell, and
wherein the UL WUS corresponds to a physical random access channel (PRACH).

14. A base station in a communication system, the base station comprising:
a transceiver; and
a processor connected to the transceiver,
wherein the processor is configured to:
transmit a synchronization signal/physical broadcast channel (SS/PBCH) block of a first cell through the first cell;
transmit an uplink (UL) wake-up signal (WUS) configuration for a second cell through the first cell;
receive a UL WUS related to the UL WUS configuration for the second cell through the second cell; and
receive on-demand system information block 1 (SIB1) of the second cell through the second cell after receiving the UL WUS.

15. The base station of claim 14, wherein the processor is configured to:
identify whether an operation related to on-demand SIB1 is activated in the first cell; and
acquire specific information based on a result of identifying whether the operation related to on-demand SIB1 is activated in the first cell,
